(19) **Europäisches Patentamt / European Patent Office / Office européen des brevets**

(11) **EP 3 194 883 B1**

(12) **EUROPEAN PATENT SPECIFICATION**

(45) Date of publication and mention of the grant of the patent:
**17.10.2018 Bulletin 2018/42**

(51) Int Cl.:
**G01B 21/04** (2006.01)  **G01B 11/02** (2006.01)
**G01B 11/25** (2006.01)

(21) Application number: **15754027.9**

(22) Date of filing: **03.08.2015**

(86) International application number:
**PCT/IB2015/055883**

(87) International publication number:
**WO 2016/020826 (11.02.2016 Gazette 2016/06)**

(54) **METHOD AND RELEVANT DEVICE FOR MEASURING DISTANCE WITH AUTO-CALIBRATION AND TEMPERATURE COMPENSATION**

VERFAHREN UND RELEVANTE VORRICHTUNG ZUR ENTFERNUNGSMESSUNG MIT SELBSTKALIBRIERUNG UND TEMPERATURAUSGLEICH

PROCÉDÉ ET DISPOSITIF PERTINENT POUR MESURER LA DISTANCE AVEC UN AUTO-ÉTALONNAGE ET UNE COMPENSATION DE TEMPÉRATURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.08.2014 IT RM20140463**

(43) Date of publication of application:
**26.07.2017 Bulletin 2017/30**

(73) Proprietor: **Ingenera SA**
**6944 Cureglia (CH)**

(72) Inventor: **BIONDI, Andrea**
**CH-6944 Cureglia (CH)**

(74) Representative: **Perronace, Andrea et al**
**Jacobacci & Partners S.p.A.**
**Via Tomacelli, 146**
**00186 Roma (IT)**

(56) References cited:
**WO-A1-2013/184340     WO-A1-2014/063020**
**US-A1- 2012 307 260**

**Description**

The present invention relates to a method and relevant device for measuring distance by auto-calibration and temperature compensation.

More in detail, the present invention relates to a method for the remote measurement of objects which makes use of a single laser generator and a camera, for example installed on a mobile device (smartphone). The method takes into account the change in the nominal design parameters due to the temperature of the device and construction tolerance. The present invention also relates to a device (smartphone) that comprises the means configured to implement the method of the invention.

State of the art

There are a number of softwares, disseminated on the Internet and in the on-line store of smartphone applications, aimed at the measuring distant objects by means of a photograph. Three categories of solutions of this type can be distinguished.

The first category of solutions requires to define somehow the Smartphone's height from ground level ($h$), then it requires the user to enter the object base on the framed object, which is flush with the user, the angle ($\varphi$) between the straight line perpendicular to the observed object and the line connecting the camera of the smartphone with the object's base. On the basis of and $h$ e $\varphi$, the distance at which the object is located can be estimated as $D = h/\tan(\varphi)$. Based on the distance and the characteristics of used optics, measurements on the object can be carried out. The main disadvantages of such a method are: (a) difficulty of use, wherein small errors by the user can produce important variations in the measurement, (b) poor accuracy and general repeatability of the system in measuring; (c) possibility to make measurement estimates only in the case of stationary objects.

A second category of solutions requires the use of reference objects of known dimensions to be placed in the vicinity of the objects to be measured. Based on the known size of the object and depending on the characteristics of the camera lens, the size of the observed object is deduced. The main drawback of such a solution consists in the need to use a reference, such as a printed sheet, coplanar to the object to be measured. This excludes the measurement of moving objects, or objects that cannot be reached, or in severe weather conditions that do not allow the positioning of the reference.

Another class of solutions uses the integrated GPS receiver in the smartphone to store notable points, and then derive distances and areas, such as of plots of lands or buildings. The main drawback of such a solution is the poor accuracy, since the GPS signal is masked and allows to estimate measurements with an error of several meters. Then the solutions are suitable to the measurement of large areas, but are not applicable to the measurement of objects, people or animals.

It is also noted the existence of tools to take measurements on the basis of photographic distant objects by estimating the distance between the measuring system and the observed object by range-finder. Once the distance and the optical characteristics are known, they can be used to obtain measurements of the observed object. The main disadvantage of such a solution is (a) a strong dependence of the accuracy of measurement on the quality of the range-finder. Two main types of range-finders are widespread in the consumer market: the ultrasonic range finders and laser time-of-flights range-finders. The ultrasonic rangefinder has a low accuracy, especially on objects of small size with increasing distance. A time-of-flight laser rangefinder, on the other hand, has very high accuracy with objects, having opaque and smooth surfaces, on smooth background, while presenting reductions of accuracy where the surface is very uneven. In the case wherein a time of flight laser rangefinder is used, a further drawback of this solution consists (b) in the cost of the rangefinder itself, since the greater is the accuracy and immunity to environmental noise need, the higher its cost will be. A further disadvantage (c) of the used physical principle consists in the intrinsic fragility of the mechanics of the instrument, so when the latter undergoes a shock or is exposed to hostile environments, it could lose the factory accuracy. It is not possible to calibrate the instrument on the field, what makes its application in harsh environments particularly critical.

There are then tools which use laser generators which project a pattern of known size onto the object observed by a camera. Since the principle consists in projecting a reference metric of known dimensions on the object, regardless of the distance between the camera system and the observed object, this solution requires the perfect parallelism of the laser beams and their perpendicularity to the plane of the camera. The system also requires, for its proper operation, that the measurement plane is parallel to the camera plane. Let us consider for simplicity the case in which this tool uses two laser generators capable of generating two beams perfectly parallel to each other, thus projecting the object to measure two points placed at a known distance (A). The measurements in centimetres of object can be deduced from the measurements in pixels and A. Let us consider that a segment on the photo has a length of $\mu$ pixels and that the distance between the two laser reference points is $\lambda$ pixels, then the measurements M in centimetres of the segment will be given by the following ratio: $M = \Lambda\mu/\lambda$. The main disadvantages of this solution are: (a) from the constructive point of view, it is very mechanically complex to achieve a solution in which the laser beams are perfectly parallel to each other. In fact, even a very small inclination of a beam relative to the other, at a distance of some meters, produces a considerable error, the effect of which on the estimation of the measurement is further amplified by the above proportion. Let us consider for example to have a inter-axial distance between the two laser generators equal to $\Lambda$ = 5 cm, let us consider there is a manufacturing error or the device has undergone a small shock and that the two laser beams are no longer perfectly parallel, but form with each other an angle we say equal to 1/10 of a degree. Let us now consider photographing an object at a distance of 5 meters. Because of no more perfect linearity of the two laser beams, the two laser points on the object will be no more far away 5 cm with each other, but $\Lambda'=\Lambda+D\cdot\tan(\alpha)\cong5.87$ cm. If we assume that 5 cm at 5 meters correspond to 50 pixels in the image, one has that, in the case of no longer parallel laser beams, the two laser points will be far away approximately 58.7 pixels in the image. If we consider measuring a object having 500 pixels length in the image, in the event of perfect parallelism of the lasers, a measurement of 50 centimetres would result, while in the case under examination a measurement of about 42.5 cm is obtained. It is thus seen that a inclination of a tenth of a degree of a laser with respect to the other produces an error of 7.5 cm out of 50 cm at 5 meters of distance, which is an error percentage of 15% on the measure. This inherent fragility of the system implies on one hand a serious production problem, which is reflected in a high cost of production and on the other hand in an extreme fragility of the instrument, which results in a difficult applicability on the field.

Further criticality of this type of system consists in the sensitivity to any source of geometric variation, such as the variations in operating temperature. In fact, the expansion of the mechanical housing of the laser due to a temperature increase would provoke a variation in the position and mutual inclination of the beams, such as to considerably reduce the accuracy of measurement, as already illustrated.

In addition, this system provides no possibility of being calibrated on the field, even in theoretical terms, because the geometrical principle that is the basis of this system necessarily requires the parallelism of the laser beams.

WO2014/063020 discloses a device that comprises a first device that includes light sources configured to project one or more references on a surface. The apparatus comprises a second device which includes a camera that is configured to capture an image of the projected references and is further configured to capture an image of at least a portion of the surface and/or of an object placed on it or inside it. A processing unit is operatively coupled to at least one between the first and the second device and is configured to receive and process all the images so as to determine information on at least a part of the surface and/or the object mentioned above.

US2012/307260 discloses a system and a method for imaging an object within a field of view, by projecting a field of illumination over the object within the field of view, and selectively projecting illumination structures on the object within the field of view. Subsequently, image data corresponding to the illumination field and illumination structures can be received and product features can be analyzed based on the field of illumination and illumination structures.

Object of the present invention is to provide a method and related device for remote measurement, particularly with auto-calibration and thermal compensation, which solves the problems and overcomes the drawbacks of the prior art.

It is subject-matter of the present invention method, means and devices for implementing the method according to the appended claims, included integrally by reference in the present description.

The invention will be now described, for illustrative but not limitative, with particular reference to the drawings of the accompanying figures, in which:

- Figure 1 shows a general diagram of the system according to the invention;
- Figure 2 shows a schematic drawing of the system according to the invention, incorporated in a smartphone;
- Figure 3 shows a first flowchart of the method of image processing according to the invention;
- Figure 4 shows the step of the extraction of the area of search of the point of interference laser and reduction in scale of the image, according to the method of the invention;
- Figure 5 shows a flow chart of the step of search for the point of laser interference, according to the invention;
- Figure 6 shows a schematic illustration of the calculation of centre of gravity and the effect of sub-pixeling, according to the invention;
- Figure 7 shows a flow chart of a step of analysis of the groups of pixels, according to the invention;
- Figure 8 shows a flow diagram of auto-calibration step of the $K_T$ according to the method of the invention;
- Figure 9 shows a geometric design of calibration of the system according to the invention by means of the reference target;
- Figure 10 shows a further diagram of the geometric system of measurement, according to the invention;
- Figure 11 shows the effect of approaching an object on the geometric system;
- Figure 12 shows a geometric pattern in the more general case of relative inclination of the plane on which the object finds itself, which is to be measured with respect to the plane of the camera;
- Figure 13 shows a flow diagram of the phase of auto calibration of the parameter $\gamma$, according to the invention;
- Figure 14 shows a numerical example of calculation of the $\gamma$. Whereas a number of acquisitions that have produced the same target sequences $d_p$ and $m_p$ given in the figure, the average value of $\gamma$ obtained by applying the algorithm of Figure 13 is equal to 107, 6;

- Figure 15 shows a numerical example of calculation of $d_{cm}$. Considering a series of acquisitions that have produced the same target sequences $d_p$ and $m_p$ given in the figure, the average obtained value of $d_{cm}$ is equal to 9,43.

**Detailed description of embodiments of the invention**

The method according to the invention has the purpose of making accurate measurements of far objects by the interference of a single coherent light beam focused and continuous on the object itself. The measuring system consists of a laser generator and a set of sensors applied to a portable/mobile computerized shooting apparatus (e.g. smartphone) and controlled by software installed within the same apparatus.

The principle used does not provide a pre-defined geometric scheme. In particular, knowledge of the position of the laser generator with respect to the CCD camera and the inclination from the horizontal axis of the laser beam it are not necessarily a priori required. These features are dependent on the particular physical implementation and the mechanical deformations of the system due to the production process, the wearing of the instrument, changes in internal and environment temperature. A specific feature of the invention is the auto-calibration that allows the instrument to deduce its geometrical characteristics during its own operation. This implies that the measuring system continuously evolves, adapting in time for the particular environment in which it is used and for its own mechanical variations.

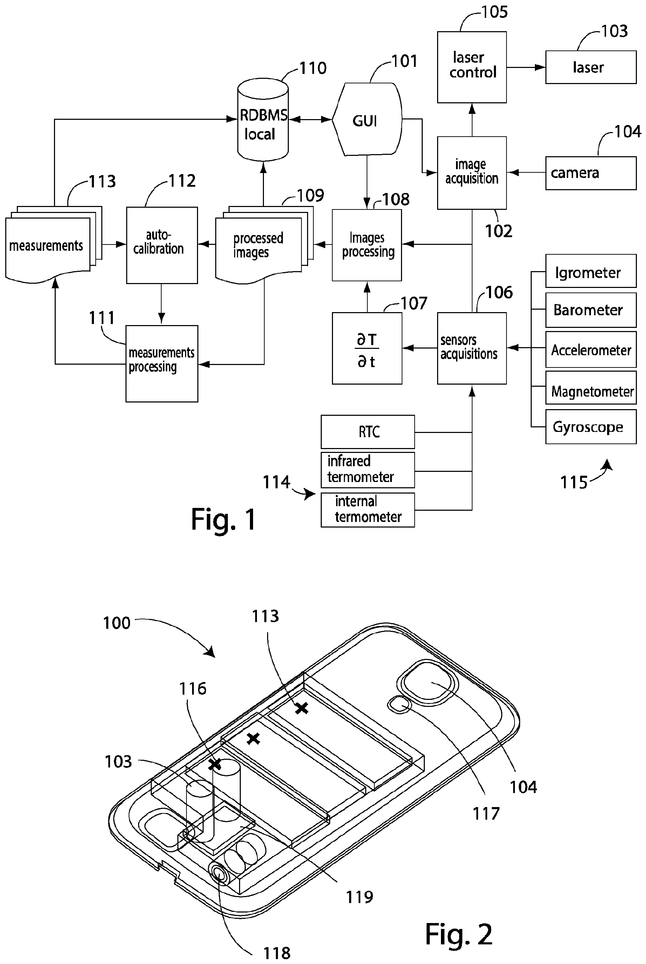

As illustrated in Figure 2, a smartphone 100 according to the invention includes a camera 104 and a flash 117, a laser 111, an infrared thermometer 116 for detecting the ambient temperature (reference temperature environment to which the below explained calibration and the photo is done), the power source 118 and the PCB 119.

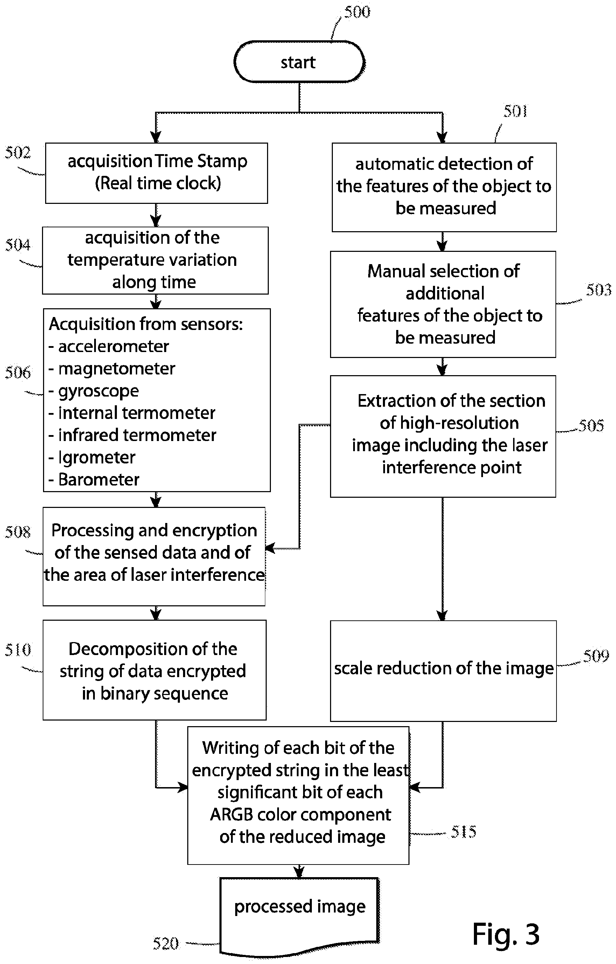

As illustrated in Figure 1, under the control of the GUI ("Graphical User Interface") 101 the images acquisition unit 102, commands the laser control unit 105 to activate the laser transmitter 303, acquires a frame 4 by means of the camera 30 and at the same time commands the unit 306 of acquisition of sensors 115, 114 to record the value from all the sensors. In addition, by means of the RTC ("Real Time Clock") and the sensors for indoor and outdoor temperatures, the system processes the derivative $\partial T / \partial t$ of the temperature over time 107, i.e. a measure of the speed with which the device temperature is changing. All these data are combined by the images processing unit 108 for example according to the algorithm illustrated in Figure 3. The purpose of this algorithm is to obtain a high level of non-destructive compression of the image. This goal is achieved by extracting the basic information from the image and recording them in encrypted form in a second processed image 9, obtained by the reduction in scale of the original image and the encrypted combination of sensory data in the pixels of the image itself.

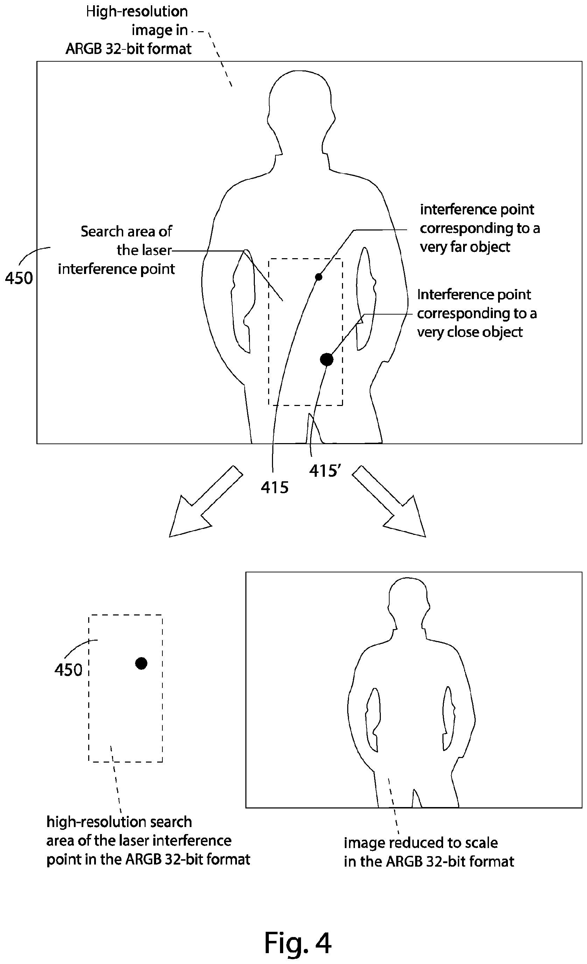

In particular, making reference to Figure 4, the algorithm of images processing in the first place extracts a portion 450 of the original image with high resolution, wherein the point generated by the interference of the laser with the observed object is present. This point will be in a different relative position 415, 415' in the image in relation to the distance between the observed object and the shooting apparatus. Secondly, the algorithm reduces to scale the original image according to a configurable reduction factor. Thirdly, the pixels of the search area of the laser spot, the data recorded by the sensors and other information entered by the operator are processed and encrypted so as to form a single binary string. The bit composing such binary string are overwritten to the less significant bits of each colour component of pixels of the scaled image. Considering that the image has a colour depth of 32 bits divided into four components ARGB, it takes two pixels to record each byte of the string. This implies an alteration of the image scaling, that however is not perceptible to the naked eye. The meaning of this processing is to achieve three results: (1) preferably, the image must be as compact as possible, to simplify the processing and transmission, and this is achieved by writing the data to accompany the image within of the image itself; (2) a high resolution is useful only in determining the point of laser interference on the observed object, then preferably, from the original high resolution image, only the area within which the laser may fall is cropped, while the image as a whole is preferably reduced to scale; (3) the image should preferably be secure with respect to the possibility of alterations, and this is achieved by encrypting the data encoded in the image bits and by applying one or more verification codes of cyclic redundancy check (CRC). In this way, any change in the image, even small or not perceptible to the naked eye, can be detected automatically.

To explanatory purposes, let us consider the image taken by a camera of 12 Mega pixels (e.g. 4128 x 3096 pixels) and consider to have a research area of the laser of 1000 x 60 pixels. By considering to compress the extracted area of 60 x 1000 pixels, according to an non-destructive JPEG algorithm, we can consider a memory footprint of about 100 Kbytes. According to the described algorithm, it takes 100,000 x 2 = 200,000 pixels of the new image top record such data. Let us consider then to record the sensor data using floating-point double precision, corresponding to occupation of memory of 64-bit. Considering the case in which the position/tilt sensor is constituted by an accelerometer, gyroscope and magnetometer, for each of them the three components x, y and z, two numbers for the representation of date and time and further 4 sensory data have to be recorded, one has an overall occupancy for the recording of such data of (3 + 2 + 4) * 8 bytes * 2 pixels/byte = 144 pixels. Considering also recording additional 2000 bytes, or 4000 pixels, other information and one or more CRC, one has an overall need for less than 210,000 pixels. This implies that the maximum scale reduction ratio used is equal to about 1/57 of the original image. By using a non-destructive JPEG compression algorithm, the processed image will have an occupancy of memory up to 120 Kbytes. Whereas the original uncompressed image has an occupancy of about 3 Mbytes of memory, there is a reduction in terms of memory footprint to about 1/25 of the original one.

In figure 3 it is shown a block diagram of the general operation of the system according to the invention is shown. After the start 500, there is a bifurcation. On one side, in 501 there is automatic discovery on the scanned image of the characteristics of the object to be measured. It then continues with block 503 in which there is a manual selection of additional features to be measured. In block 505 a section of the image in high resolution containing the point of laser interference is extracted. At this point in 509 the reduction in scale of the image. Meanwhile, on the other branch of the bifurcation, at 502 there is the registration of a timestamp, in 504 subsequently there is recording of the temperature change in time, and in the subsequent block 506 the data acquisition from the sensors (for example: accelerometer, magnetometer, gyroscope, internal thermometer, infrared thermometer, hygrometer, barometer). Finally one arrives at block 508 where there is processing and encryption of data from the sensors and from laser interference area coming from the block 505. One then passes into 515 to write each bit of the encrypted string in the least significant bit of each ARGB colour component, and finally in 520 to the processed image.

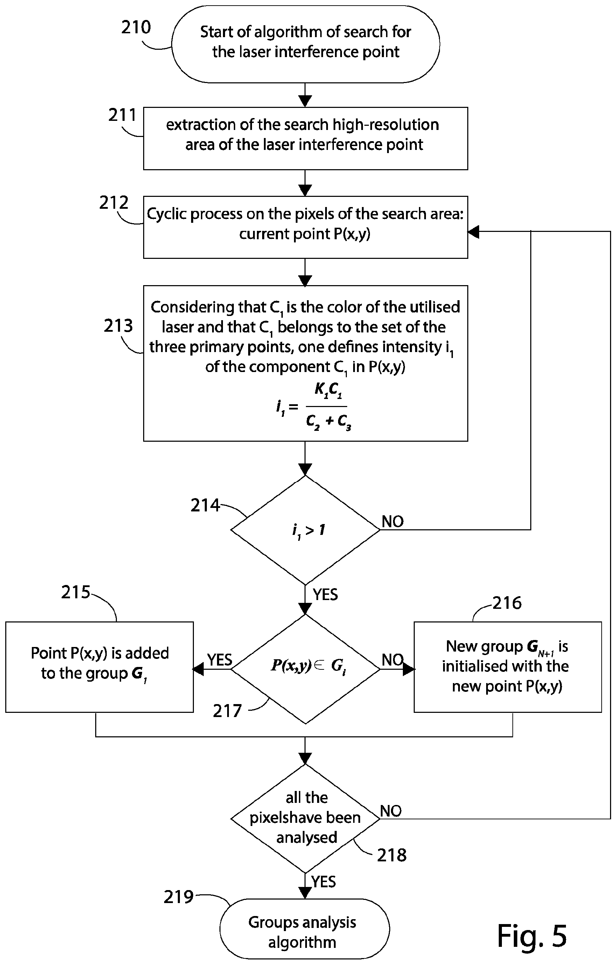

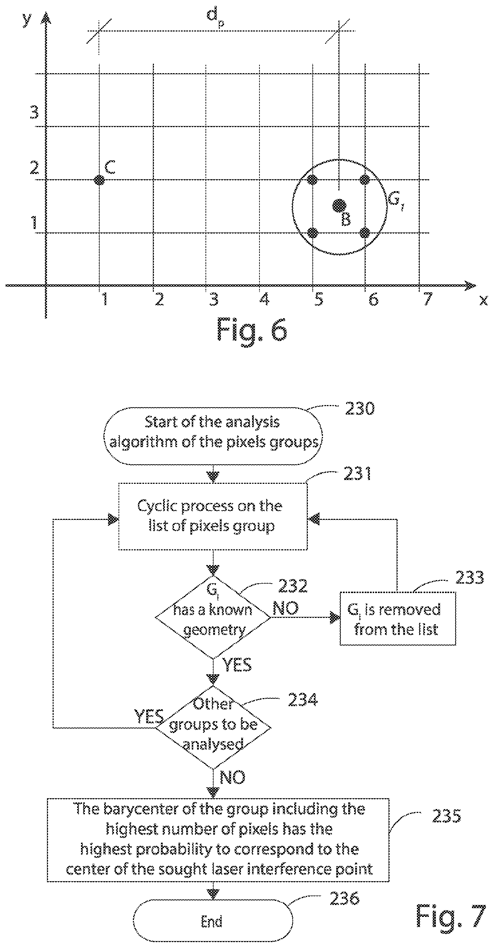

Continuing to consider the diagram in Figure 1, the images processed 109 according to the described algorithm, are recorded in the local relational database 110 and are used by the measurements processing unit 111. This unit applies the algorithm for searching the point of laser interference. The diagrams of Figure 5 and Figure 6 which describes this algorithm are taken into consideration. The general purpose of the algorithm is to analyze the pixels of the image so as to identify the group of pixels corresponding to the point of laser interference on the observed object and to calculate its centre of gravity. After the start 210 of the algorithm, the first step 211 consists of extracting from the original high-resolution image a smaller area wherein the point laser interference can fall. The dimensions of this area are not reset in the system, but are determined during the calibration process (automatic determination of the search area of the laser interference point). A cyclical process 212 is then started, which is aimed at examining all the pixels of the search area. Considering to have an RGB image, for each point P(x,y) three components red, green and blue are extracted, which are references as $C_1$, $C_2$ and $C_3$. In 213 the relative intensity $i_1$ of the component $C_1$ is calculated with respect to the others:

$$ i_1 = \frac{K_1 C_1}{C_2 + C_3} $$

wherein $K_1$ is the numeric constant that defines the relative weight of the component $C_1$. This parameter is calculated during the process of auto-calibration.

It must be said here in general that the described processes of self-calibration may also not be possible in some conditions. In such cases, the system will prompt the user to enter parameters manually.

The laser must have colour equal to $C_1$. Consider for example to use a laser of green colour. One has that $C_1$ corresponds to the green component, while $C_2$ and $C_3$ represent the red and blue components. So, in this particular case, the relative intensity is given by:

$$ i_1 = \frac{K_1 G}{R + B} $$

Continuing to examine the algorithm of Figure 5, and in particular the step 214, wherein the thus calculated relative intensity is greater than 1, then in 217 one verifies whether the pixel P(x,y) under examination already belongs to one of N groups of pixels $G_i$ predefined (typically initially empty), with $i$ = 1, ... N. The belonging verification is carried out by calculating the distance according to Pythagoras between the pixel P(x,y) and the barycentre $B_i(x_i,y_i)$ of $i$-th group $G_i$. When this distance is less than an appropriate default value K2, then the pixel is so close to the centre of gravity $B_i$ that it has highest probability to belong to the group G:

$$ \sqrt{(x - x_i)^2 + (y - y_i)^2} < K_2 \quad \Rightarrow \quad P(x, y) \in G_i $$

Coming back to the diagram of Figure 5, wherein the pixel under examination P(x,y) does not belong to any of the N groups of pixels already formed, then it will result in 216 into a new group $G_{N+1}$ of pixels characterized by a centre of gravity initially coincident with the pixel itself. In case instead the pixel P(x,y) belongs to the group $G_i$, then it is added in 215 to the list of pixels of that group and the new centre of gravity will be given by:

$$x_i^{'} = \frac{N \cdot x_i + x}{N + 1}; \qquad y_i^{'} = \frac{N \cdot y_i + y}{N + 1}$$

When all the pixels of the search area have been examined, then it goes on to examine the groups of pixels, according to the algorithm illustrated in figures 6 and 7. After the start 230 of the algorithm, a cyclical analysis of groups of pixels is done to the aim of excluding those groups that do not have the same symmetry and proportions ratio typical of the point of intersection between the used laser beam and the observed object. Considering for example a point-like type laser with circular symmetry, verification 232 will consist in the calculation of the ratio between the two axes of the distribution of points. In particular, considering the pixels of the i-th group $G_i$, where $X_{i,MIN}$ is the minimum value of the abscissa, $X_{i,MAX}$ the maximum value of the abscissa, $Y_{i,MIN}$ is the minimum value of the ordinates and $Y_{i,MAX}$ the maximum value of the ordinates, one has that:

$$1 - \Delta \leq \left| \frac{X_{i,MAX} - X_{i,MIN}}{Y_{i,MAX} - Y_{i,MIN}} \right| \leq 1 + \Delta \qquad \Rightarrow \qquad G_i \text{ has circular simmetry}$$

wherein $0 < \Delta < 1$ is a numeric value that represents the tolerance with which a cloud of points can be assimilated to the sought shape, in this case with circular symmetry.

In the case wherein the i-th group $G_i$ does not pass this verification, it is deleted from the list of groups of pixels in step 233. The process continues to analyze in 234 the other groups of pixels. Once the groups of pixels to be examined are completed, the process continues in 235 by searching in the filtered list the group containing the largest number of pixels. This group of pixels is located within the search region, has the same symmetry of the searched interference laser and is the one that contains the largest number of pixels that meet the colour characteristics of the laser, then its centre of gravity has the most probability of being the centre of the sought laser interference point. The process ends in step 236.

Note that such a technique, calculating the center of gravity of a points cloud, presents the advantage of providing a more accurate result of the resolution of the camera system. For example, let us consider an image whose centre has the co-ordinates $C(1,2)$ and the group corresponding to the point of laser interference $G\{(5,1);(5,2);(6,1);(6,2)\}$, as illustrated in Figure 7. The centre of gravity of the points group will be B (5.5, 1.5), then with twice the resolution of the image. The abscissa distance between the centre of the image C and the centre of gravity B of the group G will prove to be $d_p = 4.5$.

Continuing to examine the diagram in figure 1, the processed images 9 and the measurements 13 are used to feed the process of auto-calibration 12 which in turn generates the parameters used by the measurements processing unit 11. Measurements are then recorded in the database 10.

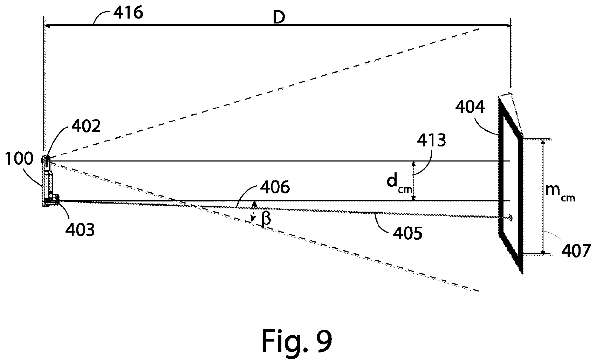

Considering Figure 9, it can be seen that the laser beam 405 is not perfectly perpendicular to the plane of the CCD 402, but is inclined with respect to the perpendicular to that plane by an angle 406, depending on the mechanical characteristics of the device 100 (e.g. constructive accuracy) and the characteristics of the laser diode used inside the generator 403. Furthermore, the thermal variations of the system and the environment influence such geometry. The target 404 is an object used as a reference for the calibration of the instrument. This object, as will be seen later on, can be of a size which is not known a priori. As a particular case, a known calibration reference can be used, characterized by a regular shape delimited by high contrast edges, so as to simplify the automatic interpretation. In the final analysis, the calibration process has the purpose of allowing empirical determination of the angle $\beta$ 306, which summarizes as such the constructive nonlinearities that can vary from piece to piece and all the non-linearities of environmental type.

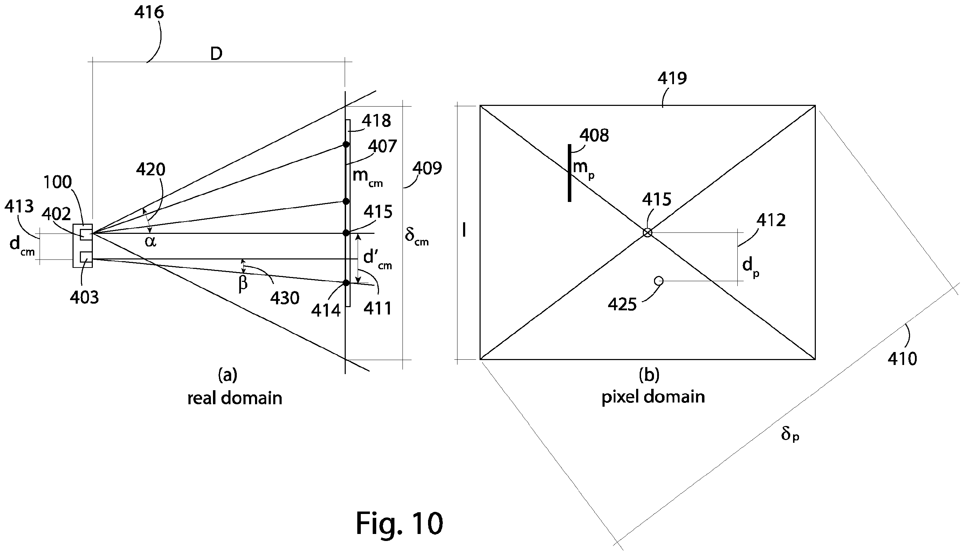

Let us consider Figure 10 in which the geometric system concerned is schematically illustrated. Let us consider a camera 402 and a laser generator 403 placed at a distance $d_{cm}$ (cfr. figure 9) not necessarily known a priori. Let us consider that the camera 402 has an opening angle $\alpha$ 420 that can be calculated from the parameters of the used optics. In particular we have that:

$$\tan(2\alpha) = \frac{D_{CCD}}{2} \cdot \frac{1}{f_{eq}}$$

wherein $f_{eq}$ is the equivalent focal length of the optics, declared by the manufacturer of the camera and $D_{CCD}$ is the diagonal of the CCD full frame 24 mm x 36 mm, used as reference.

Let us assume then that the laser beam generated by the laser generator 403 is inclined by an angle $\beta$ 430 with respect to the line perpendicular to the plane of the CCD 402. This angle is not known a priori.

In Figure 10 two schemes are shown: (a) representation in the real domain and (b) representation in the domain of the image or pixels. Note that there exists a direct proportional relationship between measurements in the real domain (for example, expressed in centimetres) and measurements in the domain of the image (in pixels).

By observing figure 10 (a), which represents the geometric system in the real domain, it can be deduced easily that the position $d'_{cm}$ 411 wherein the point of laser interference 414 finds itself with respect to the physical point 415 corresponding to the centre of the image, will be given by the relationship:

$$(1) \qquad d'_{cm} = d_{cm} + D\tan(\beta)$$

wherein D is the distance 416 between the system 100 and the observed object 418 and $d_{cm}$ is the distance 413 between the centre of the CCD 402 and the centre of the laser generator 403.

By virtue of the relationship of proportionality between the real domain and the domain of the image one has:

$$(2) \qquad \delta_{cm} : \delta_p = d'_{cm} : d_p$$

wherein $\delta_{cm}$ is the diagonal 409 of the area observable by the camera 402 at a distance 416 wherein the observed object 418 is, $\delta_p$ is the diagonal 410 in pixels of the image, $d_p$ is the distance 412 in pixels between the point 425 of the image corresponding to the point of laser interference 414 on the observed object 418 and the centre 415 of the image 419.

The measurement $\delta_{cm}$ depends on the distance D 416 and the camera features 402 summarized in the angle $\alpha$ 420 according to the following relationship:

$$(3) \qquad \frac{\delta_{cm}}{2} = D\tan(\alpha)$$

From the relationships (2) and (3) the following relationship can be obtained:

$$(4) \qquad \begin{cases} \dfrac{d'_{cm}}{d_p} = \dfrac{\delta_{cm}}{\delta_p} \\ \delta_{cm} = 2D\tan(\alpha) \end{cases} \Rightarrow \qquad d'_{cm} = \frac{2d_p D\tan(\alpha)}{\delta_p}$$

From (1) and (4), one can derive the distance D:

$$(5) \qquad \begin{cases} d'_{cm} = d_{cm} + D\tan(\beta) \\ d'_{cm} = \dfrac{2d_p D\tan(\alpha)}{\delta_p} \end{cases} \Rightarrow \qquad D = \frac{d_{cm}}{2\dfrac{d_p}{\delta_p}\tan(\alpha) - \tan(\beta)}$$

Referring again to Figure 10, it is observed that the measurement $m_{cm}$ in the real domain of a segment (7) is obtainable according to the following proportionality relation:

$$(6) \qquad m_{cm} : d'_{cm} = m_p : d_p$$

wherein $m_p$ is measured in pixels of the segment 408 in the domain of the picture corresponding to the segment 407 in the real domain. By (1) and (6) we have:

$$(7) \qquad \begin{cases} d'_{cm} = d_{cm} + D\tan(\beta) \\ m_{cm} = d'_{cm}\dfrac{m_p}{d_p} \end{cases} \qquad \Rightarrow \qquad m_{cm} = \dfrac{m_p}{d_p}\left(d_{cm} + D\tan(\beta)\right)$$

Substituting the obtained distance using the relationship (5) in the relationship (7) one has:

$$(8) \qquad m_{cm} = d_{cm}\dfrac{m_p}{d_p - \dfrac{\delta_p\tan(\beta)}{2\tan(\alpha)}}$$

Using this relationship, it is possible to derive the measurement in the real domain of a generic segment on the surface of the observed object, considered plane and parallel to the plane of the camera, in the ideal condition of the absence of temperature changes in the instrument and the environment.

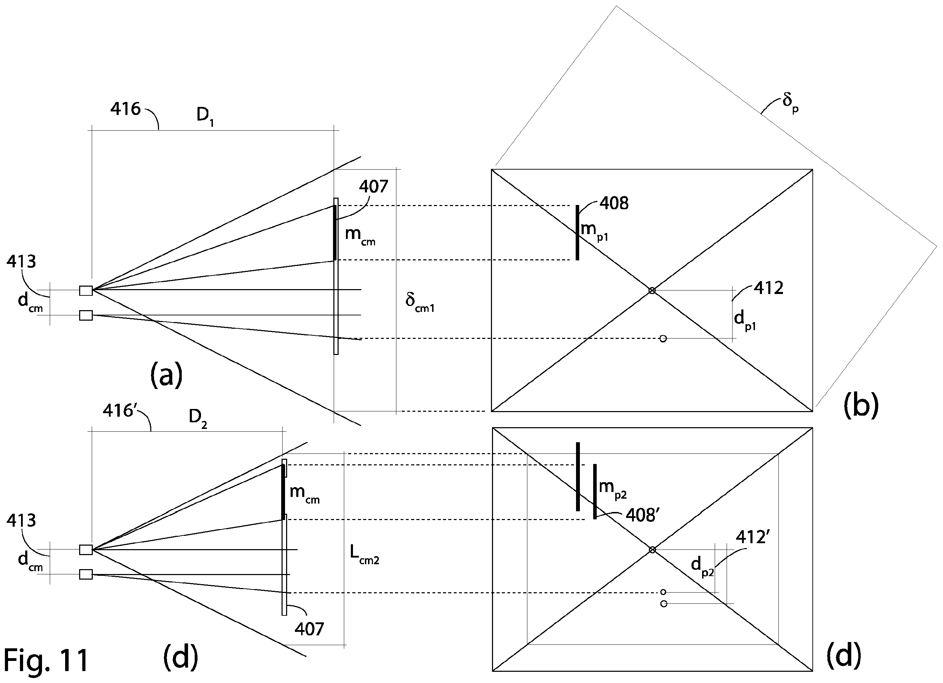

Let us consider now Figure 11, which illustrates the geometric system in the case wherein the same object 407 of dimension $m_{cm}$ in the real domain, is shot at two different distances 416 and 416'.

$L_{cm1}$ and $L_{cm2}$ are openings in cm of the camera in the two cases of the two distances 416 and 416'.

It can be seen in Figure 11 (d) (the pixel domain in the case of distance 416') that in the domain of the image segments $m_p$ and $d_p$ pass from a pixel dimensions $m_{p1}$ 408 and $d_{p1}$ 412 at distance $D_1$ 416 to dimensions in pixels $m_{p2}$ 408' and $d_{p2}$ 412' at distance $D_2$ 416'.

The parameter $\gamma$ is defined, which is characteristic of the system as follows:

$$(9) \qquad \gamma = \dfrac{\delta_p\tan(\beta)}{2\tan(\alpha)}$$

which gives $\beta$ as a function of $\gamma$.

$$(9a) \qquad \beta = \arctan\left(\dfrac{2\gamma}{\delta_p}\tan(\alpha)\right)$$

It is to be observed that for small values of $\beta$ one has that $\tan(\beta) \cong \beta$, from which:

$$(9') \qquad \gamma \cong \dfrac{\delta_p\beta}{2\tan(\alpha)}$$

The relationship (8) then becomes:

$$(8') \qquad m_{cm} = d_{cm}\dfrac{m_p}{d_p - \gamma}$$

Considering then the two images taken to the same target at different distances, from the relationship (8') one has:

$$(10) \quad \begin{cases} m_{cm} = d_{cm} \dfrac{m_{p1}}{d_{p1} - \gamma} \\[4mm] m_{cm} = d_{cm} \dfrac{m_{p2}}{d_{p2} - \gamma} \end{cases}$$

By solving the system 10, it is possible to derive the parameter $d_{cm}$, and the parameter $\gamma$ in ideal conditions of absence of temperature changes in the instrument and the environment. In particular one has:

$$(11) \quad d_{cm} = m_{cm} \frac{d_{p2} - d_{p1}}{m_{p2} - m_{p1}}$$

$$(12) \quad \gamma = \frac{d_{p1} m_{p2} - d_{p2} m_{p1}}{m_{p2} - m_{p1}}$$

Observing figure 9 one has that, if the observed object has a known size $m_{cm}$ then, by means of the relationship (11) and (12) (used both or only the (12) if it is supposed that distance $d_{cm}$ is fixed), it is possible to calibrate the system. It is observed that the parameter $\gamma$ is independent from the actual size of the target calibration. This implies that such a parameter, that embodies the characteristics of the laser, camera and mutual geometric relationship, may be evaluated during the normal use of the instrument on generic objects whose size is not known a priori.

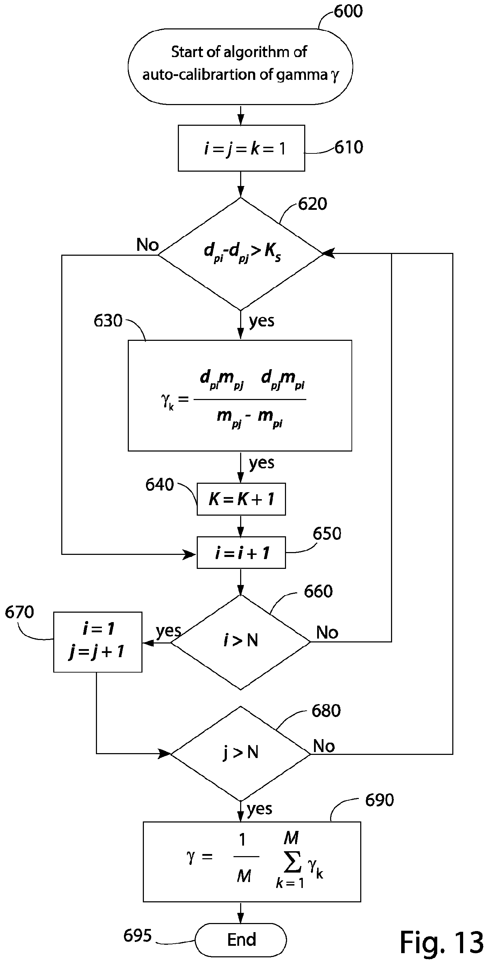

In Figure 13, the flow chart for the auto-calibration is shown, which provides for the acquisition of a series of measurements on a target of known size. The process starts in 600, and then continue with the initialization 610 to 1 of the count variables. In 620, the process provides a check on the $d_p$ of a pair of acquisitions. The verification compares the difference of $d_p$ with a parameter $K_S$, which guarantees a minimum difference between the $d_p$. If the difference is greater than the parameter, then it continues in 630 to the calculation of the $k$-th $\gamma$ and the counter $k$ is incremented in 640. If instead the difference is smaller than the parameter, then one jumps to step 650 wherein the counter $i$ of the first $d_p$ in difference is incremented. One then moves to step 660 wherein one checks if you the maximum allowable value $N$ for the counter has been exceeded. If it is passed, then one sets $i = 1$ and increments the counter j of the second $d_p$ in the difference in phase 670. If in 660 one has not reached the maximum for the counter i, then one starts again from step 620. Subsequently to step 670, one executes step 680, in which one verifies if the counter j has not exceeded the maximum $N$. If it has not been exceeded, one starts from step 620, if instead it has exceeded, then it continues with step 690 in which one calculates the average of all the values of $\gamma$ found for all pairs of acquisitions, and the process ends at 695.

If one wants to give a very limiting numerical example, let us consider two photographs acquired by shooting at two successive times, at different distances, the same object. By analyzing the two photographs, the coordinates of the laser and of the reference measurement can be deduced:

Pixel co-ordinates of the laser in the two photos:

- $x_1 = 2383$; $x_2 = 2263$

- $y_1 = 1560$; $y_2 = 1561$

Co-ordinates at the ends of the reference segment in the first photo (in pixel):

- $x'_1 = 2383$; $x''_1 = 2383$
- $y'_1 = 2391$; $y''_1 = 1561$

Co-ordinates at the ends of the reference segment in the second photo (in pixel):

- $x'_2 = 2263$ ; $x''_2 = 2263$
- $y'_2 = 1855$; $y''_2 = 954$

Characteristics of the photographs (width and height in pixel):

- $W = 4128$
- $H = 3096$

From these information, it is possible to deduce the following parameters:

$$d_{p1} = \sqrt{\left(x_1 - \frac{W}{2}\right)^2 + \left(y_1 - \frac{H}{2}\right)^2} = 319.23$$

$$d_{p2} = \sqrt{\left(x_2 - \frac{W}{2}\right)^2 + \left(y_2 - \frac{H}{2}\right)^2} = 199.42$$

$$m_{p1} = \sqrt{\left(x'_1 - x''_1\right)^2 + \left(y'_1 - y''_1\right)^2} = 1599$$

$$m_{p2} = \sqrt{\left(x'_2 - x''_2\right)^2 + \left(y'_2 - y''_2\right)^2} = 901$$

$$\gamma = \frac{d_{p1} m_{p2} - d_{p2} m_{p1}}{m_{p2} - m_{p1}} = 44.78$$

Considering the (8'), in the hypothesis wherein $d_{cm}=10,3\ cm,$ one has:

$$m_{cm1} = d_{cm} \frac{m_{p1}}{d_{p1} - \gamma} = 60.01\ \text{cm}$$

$$m_{cm2} = d_{cm} \frac{m_{p2}}{d_{p2} - \gamma} = 60.01\ \text{cm}$$

Such a measurement corresponds to the actual measurement of 60 cm of the target used in the example.

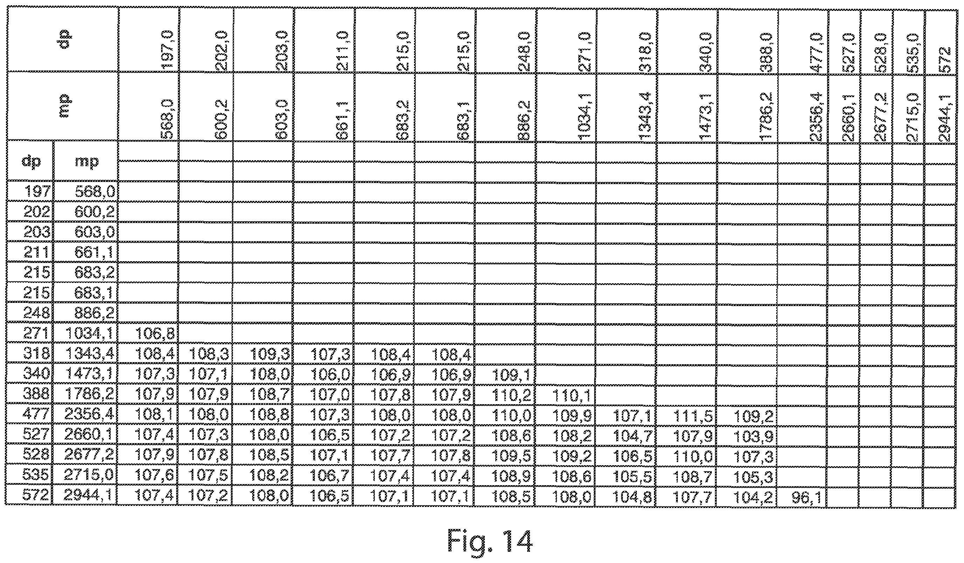

A more extensive example is provided in Figure 14. Considering a series of acquisitions that have produced on the same target the above sequences $d_p$ and $m_p$, the average value of $\gamma$ obtained by applying the algorithm of Figure 13 is equal to 107.6.

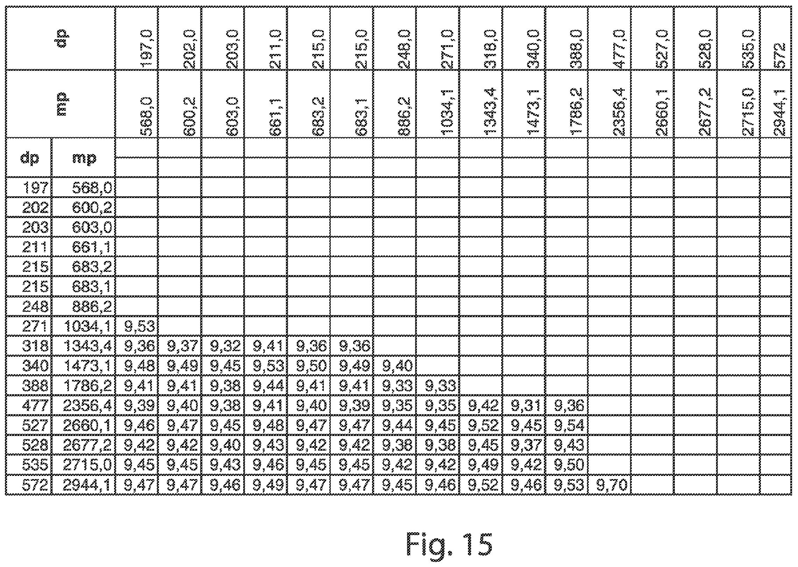

Finally, with reference to Figure 15, also the $d_{cm}$ can be measured and calibrated with the same procedure of $\gamma$. This is convenient when one suspects a change compared to construction data.

Case with temperature variation

Let us consider now the case where the temperature of the instrument changes. In the first instance we consider that the instrument steps from a stationary condition at a temperature $T_1$ to another steady-state condition at a temperature

$T_2 > T_1$. This temperature change causes a deformation of the instrument such as to vary the inclination $\beta$ of the laser with respect to the perpendicular to the CCD. Let us consider a dependence on the temperature variation of the linear type:

$$(13) \qquad \beta_2 = \beta_1 + k_T\left(T_2 - T_1\right) = \beta_1 + k_T\Delta T$$

where $k_T$ is the coefficient of linear thermal expansion. Considering to shoot the same object first at the temperature $T_1$ and then at the temperature $T_2$, from (8) we have:

$$(14) \qquad d_{p2} = \frac{\delta_p}{2\tan(\alpha)}\beta_2 + \frac{m_{p2}}{m_{cm2}}d_{cm2}$$

Considering measuring the same measurement $m_{cm} = m_{cm1} = m_{cm2}$, from (8) we have:

$$(15) \qquad m_{cm2} = m_{cm1} = \frac{m_{p1}}{d_{p1} - \dfrac{\delta_p}{2\tan(\alpha)}\beta_1}d_{cm1}$$

Substituting (15) into (14) one has:

$$(16) \qquad d_{p2} = \frac{\delta_p}{2\tan(\alpha)}\beta_2 + \frac{m_{p2}}{m_{p1}}\left(d_{p1} - \frac{\delta_p}{2\tan(\alpha)}\beta_1\right)\frac{d_{cm2}}{d_{cm1}}$$

By indicating $\Delta T = T_2 - T_1$ and substituting (13) into (16) one has:

$$d_{p2} = \frac{\delta_p}{2\tan(\alpha)}\left(\beta_1 + k_T\Delta T\right) + \frac{m_{p2}}{m_{p1}}\left(d_{p1} - \frac{\delta_p}{2\tan(\alpha)}\beta_1\right)$$

Remembering (9), by simplifying and grouping one has:

$$(17) \qquad d_{p2} = \frac{m_{p2}}{m_{p1}}d_{p1} - \gamma_1\left(\frac{m_{p2}}{m_{p1}} - 1\right) + \frac{k_T\delta_p}{2\tan(\alpha)}\Delta T$$

from which it is possible to derive the constant $k_T$ which represents the coefficient of linear thermal expansion and describes the dependence of $d_p$ on the temperature in the stationary regime:

$$(18) \qquad k_T = \frac{d_{p2} - \dfrac{m_{p2}}{m_{p1}}d_{p1} + \gamma_1\left(\dfrac{m_{p2}}{m_{p1}} - 1\right)}{\dfrac{\delta_p}{2\tan(\alpha)}\Delta T}$$

The (18) therefore allows the system to perform automatic calibration during normal operation, indeed, using only parameters which can be derived from the image, is independent of the knowledge of the measure $m_{cm}$ in the real domain of the reference used.

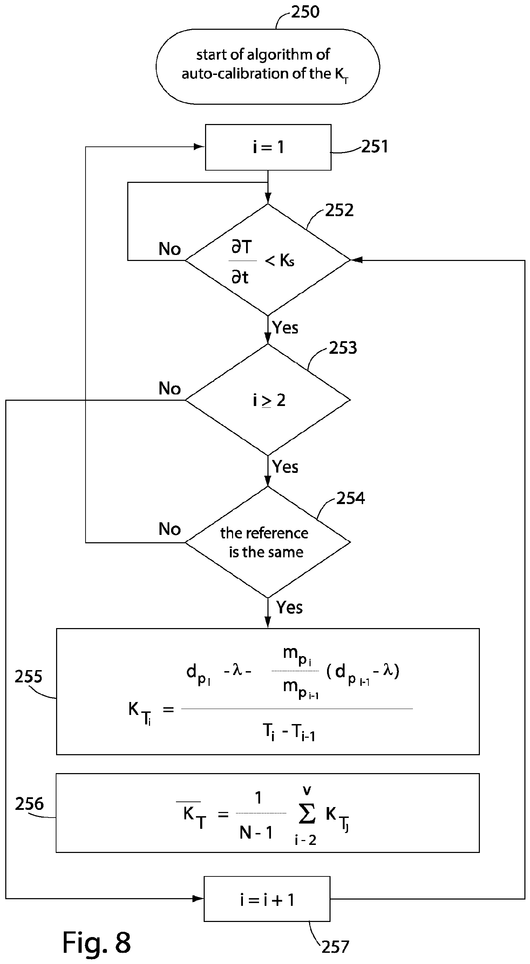

In order to illustrate the principle of auto-calibration Figure 8 is taken into consideration. Starting from the block 250, the system proceeds in 251 at initialization of the index $i$ equal to 1 ($i$ is the counter of the images taken for the calibration). In block 252, it is checked whether $\partial T/\partial t < K_s$, wherein $K_s$ is a suitable very small constant. In the positive case, one has that the system can be considered in quasi-stationary regime (verification of stationarity condition). In step 253 one verifies if $i$ is greater than or equal to 2 (verification of permanence of the stationary condition). If it is not, $i$ is incremented in block 257, otherwise it proceeds to step 254 (verification of permanence of the reference). This step is intended to limit the analysis to photographs carried on the same reference. The change from an image of the calibration and the next one in this case is solely due to the effect of temperature variation, then it deals with a weak variation. If the level of correlation (correlation such to determine whether the object is the same) between an image and the next one is very high, then the process can continue, otherwise the index is reset and the algorithm starts again. In step 255 it calculates the $K_T$ for a pair of images acquired at different temperatures, with the formula (18). The values obtained for the various pairs are averaged then in 256.

Substituting (13) into (8') we have that

$$m_{cm2} = d_{cm} \frac{m_{p2}}{d_{p2} - \gamma_2} = d_{cm} \frac{m_{p2}}{d_{p2} - \gamma_1 - \dfrac{\delta_p k_T \Delta T}{2\tan(\alpha)}}$$

In the light of the above, the formula (8') becomes:

$$(19) \qquad m_{cm} = d_{cm} \frac{m_p}{d_p - \gamma - K_T \Delta T}$$

wherein

$$K_T = \frac{\delta_p k_T}{2\tan(\alpha)}$$

As an example, reference is still made to the two photographs of the above mentioned example. From the calculations previously developed, it was possible to derive $d_{p1}$, $d_{p2}$, $m_{p1}$, $m_{p2}$, $\gamma$. Let us consider making such measurements at an operating temperature of the device $T_1 = 25\ °C$. Let us consider also using an instrument equipped with a camera with a equivalent focal length equal to $f_{eg} = 31\ mm$. As already illustrated, from this parameter the opening angle is easily deducible.

Let us consider making another picture to the same target after a rise in the operating temperature of the device equal to $\Delta T = 10\ °C$. It is observed an increase of the angle $\beta$ of 0,2°. In such conditions, in the case of the example considered, the error produced on the assessment of the measurement of the target is slightly smaller than 5%. Obtaining the $k_T$ from (18) and applying (19) we obtain the full balance of the effect of the change in the internal temperature.

One of the main causes of change of temperature of the system is the temperature rise of the CPU following a intensive computational task. Considering that the system steps from a state of rest, in which it is at room temperature, to a state of intensive work, we have that the temperature reached by the device in the steady state is a function of ambient temperature. In fact, considering for example the component of the heat flow $\dot{q}_C$ due to the transmission by convection, one has:

$$(20) \qquad \dot{q}_C = \alpha_c (T_S - T_A)$$

where $\alpha_c$ is a coefficient of convective thermal conductance, $T_S$ the surface temperature of the system and $T_A$ the temperature of the fluid in which the device is immersed (e.g. air).

Let us consider now the system in the transient regime, i.e. at the moment in which $\partial T/\partial t \geq K_S$. In such a situation the measuring system will not finds itself at a constant and uniform temperature and there will be a heat flow from the warmer regions of the device toward the colder ones. In this case, according to the general Fourier equation, it is necessary to introduce a dependence on the derivative of the temperature over time by a coefficient of diffusivity $\psi$:

$$(21) \qquad \frac{\partial^2 T}{\partial x^2} = \frac{1}{\psi} \frac{\partial T}{\partial t}$$

In the transitory state $\beta$ will vary as a function of the temperature derivative over time:

$$(22) \qquad \beta_2 = \beta_1 + k_T \Delta T + k_D \frac{\partial T}{\partial t}$$

wherein $k_D$ is the coefficient of non-linear thermal expansion.

Considering photographing the same object during the transitional arrangements, from (8) we have:

$$(23) \qquad d_{p2} = k_T \Delta T_2 + \frac{\delta_p}{2\tan(\alpha)} \beta_2 + \frac{m_{p2}}{m_{cm2}} d_{cm2}$$

Considering detecting the same measurement $m_{cm} = m_{cm1} = m_{cm2}$, one has:

$$(24) \qquad m_{cm2} = m_{cm1} = \frac{m_{p1}}{d_{p1} - \dfrac{\delta_p}{2\tan(\alpha)} \beta_1 - k_T \Delta T_1} d_{cm1}$$

Substituting (24) into (23) one has:

$$(25) \qquad d_{p2} = k_T \Delta T_2 + \frac{\delta_p}{2\tan(\alpha)} \beta_2 + \frac{m_{p2}}{m_{p1}} \left( d_{p1} - \frac{\delta_p}{2\tan(\alpha)} \beta_1 - k_T \Delta T_1 \right) \frac{d_{cm2}}{d_{cm1}}$$

Substituting the relationships (22) into (25) one has:

$$d_{p2} = k_T \Delta T_2 + \frac{\delta_p}{2\tan(\alpha)} \left( \beta_1 + k_T \Delta T_1 + k_D \frac{\partial T}{\partial t} \right) + \frac{m_{p2}}{m_{p1}} \left( d_{p1} - \frac{\delta_p}{2\tan(\alpha)} \beta_1 - k_T \Delta T_1 \right)$$

Remembering (9), simplifying and grouping gives:

$$(26) \qquad d_{p2} - k_p d_{p1} = k_T \left( \Delta T_2 + (\gamma_1 - k_p) \Delta T_1 \right) + \gamma_1 (1 - k_p) + \gamma_1 k_D \frac{\partial T}{\partial t}$$

having defined $k_p = \dfrac{m_{p2}}{m_{p1}}$, from which it is possible to derive the constant $\psi = 1/K_D$ that is the thermal diffusivity coefficient of the system in the transitory state:

$$(27) \qquad \psi = \frac{\gamma_1}{d_{p2} - k_p d_{p1} - k_T \left( \Delta T_2 + (\gamma_1 - k_p) \Delta T_1 \right) - \gamma_1 (1 - k_p)} \frac{\partial T}{\partial t}$$

The (27) then allows the system to perform automatic calibration during normal operation, indeed using only parameters that can be derived from the image, is independent of the knowledge of the measurement $m_{cm}$ in the real domain of the reference used.

Because of (21), it is possible to rewrite (19) as:

$$(28) \qquad m_{cm} = d_{cm} \frac{m_p}{d_p - \gamma - K_T (T - T_0) - \frac{1}{\psi} \frac{\partial T}{\partial t}}$$

wherein:

- $m_{cm}$ = measurement in the real domain of the segment in question
- $m_p$ = pixel measurement of the segment whose dimension in cm has to be derived
- $d_{cm}$ = distance in real domain between the center of the laser and the center of the CCD
- $d_p$ = distance in pixels between the point of laser interference and center of the image
- $T_0$ = reference temperature in °C
- $T$ = Temperature in °C at which the image was captured
- $\partial T/\partial t$ = Derivative of temperature with respect to time
- $K_T$ = coefficient of thermal conductivity of the system
- $\psi$ = Coefficient of heat diffusivity of the system
- $\gamma$ = coefficient defined by formula (9).

The (28) represents the general equation of the system for measuring the length of a segment in the real domain as a function of parameters deducible from the single image and the characteristic parameters of the system obtained by the already described processes of calibration and auto-calibration, or by simulation of a model of the device or by requesting the user.

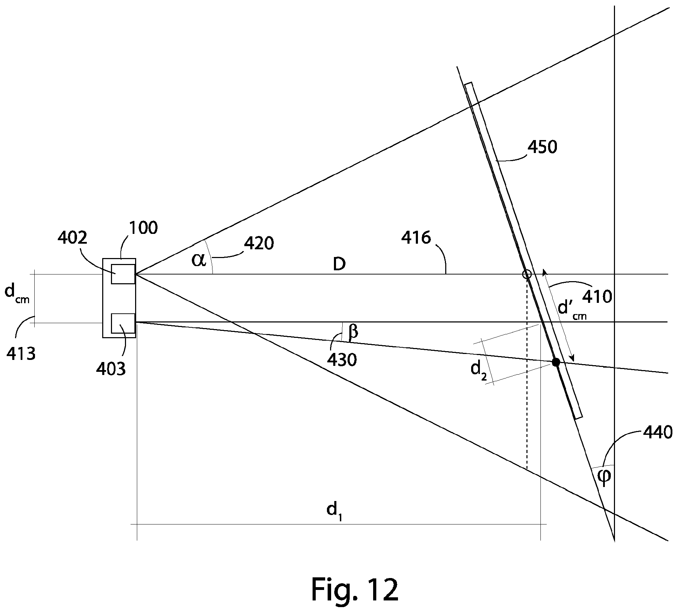

Referring now to Figure 12, where a diagram similar to that illustrated in Figure 10 is represented, but in the case in which the observed object 450 is not located on a plane parallel to the CCD, but forms an angle φ 440 with it. In analogy with what has already been illustrated, it can be observed that:

$$(29) \qquad D \tan(\alpha) : \frac{L_p}{2} = d_{cm} + D \tan(\beta) : d_p$$

from which one can derive the distance D:

$$(30) \qquad D = d_{cm} \frac{L_p}{2 d_p \tan(\alpha) - L_p \tan(\beta)}$$

Note d'$_{cm}$ 410 is given by ($d_1$ and $d_2$ are two sides of a triangle on which the law of sines applies):

$$(31) \qquad d'_{cm} = \frac{d_{cm}}{\cos(\varphi)} + d_2$$

By the sines theorem one has:

$$(32) \qquad \frac{d_2}{\sin(\beta)} = \frac{d_1}{\cos(\varphi + \beta)}$$

It is also noted that:

$$(33) \qquad d_1 = D + d_{cm}\tan(\varphi)$$

By substituting (32) and (33) into (31) we have:

$$(34) \qquad d'_{cm} = d_{cm}\frac{\cos(\beta)}{\cos(\varphi+\beta)} + D\frac{\sin(\beta)}{\cos(\varphi+\beta)}$$

By substituting (30) into (34) and recalling (9) we have:

$$(35) \qquad d'_{cm} = d_{cm}\frac{\cos(\beta)}{\cos(\varphi+\beta)}\frac{d_p}{d_p-\gamma}$$

This leads to the formula for the determination of the measurement of a segment in the case, more general than the (28), of relative inclination $\varphi$ of the measurement plane relative to the plane of the CCD:

$$(36) \qquad m_{cm} = d_{cm}\frac{\cos(\beta)}{\cos(\varphi+\beta)}\cdot\frac{m_p}{d_p-\gamma-K_T(T-T_0)-\dfrac{1}{\psi}\dfrac{\partial T}{\partial t}}$$

The (36) can be written as a function of the angle $\beta$ of inclination of the laser:

$$(36') \qquad m_{cm} = d_{cm}\frac{\cos(\beta)}{\cos(\varphi+\beta)}\cdot\frac{m_p}{d_p-\dfrac{\delta_p\tan(\beta)}{2\tan(\alpha)}-K_T(T-T_0)-\dfrac{1}{\psi}\dfrac{\partial T}{\partial t}}$$

or according to the parameter $\gamma$.

$$(36'') \qquad m_{cm} = d_{cm}\frac{1}{\cos(\varphi)-\dfrac{2\gamma}{\delta_p}\tan(\alpha)\sin(\varphi)}\cdot\frac{m_p}{d_p-\gamma-K_T(T-T_0)-\dfrac{1}{\psi}\dfrac{\partial T}{\partial t}}$$

All the considerations that from (8) have allowed to obtain expressions (11) and (12) can be re-run in the light of (36) to obtain new relationships which take account of the generic case of inclined plane:

$$(37) \qquad d_{cm} = R_{cm}\cos(\varphi_1)\cos(\varphi_2)\frac{d_{p2}-d_{p1}}{m_{p2}\cos(\varphi_1)-m_{p1}\cos(\varphi_2)}$$

$$(38) \qquad \gamma = \frac{d_{p1}m_{p2}\cos(\varphi_1)-d_{p2}m_{p1}\cos(\varphi_2)}{m_{p2}\cos(\varphi_1)-m_{p1}\cos(\varphi_2)}$$

wherein $R_{cm}$ is a reference of known size in cm.

Consider that the (37) and (38) were obtained from (36) in the steady state (but similar relationships can be derived in the unsteady state, although it is preferred in practice to use this approximation) and in the hypothesis that for the tilt angle $\beta$ of the laser beam applies the following relation: $\tan(\beta) \cong \beta$.

These relationships allow to perform a calibration of the system during its normal use even in the case in which the camera system is inclined with respect to the object to be measured, since the previous expressions take into account an relative inclination of the object with respect to the shooting system. From the tilt sensors built into the system (i.e. three-axial magnetometer, three-axial accelerometer, three-axial gyroscope) it is possible to derive the inclination angle $\varphi$ of the device with respect to the axis perpendicular to the ground.

Also the expressions (18) and (27), which allow to determine the parameters of the thermal balance of the system in steady state ($k_T$) and transient ($\psi$), can be obtained in the general case of inclined plane. Indeed, deriving from (36') the $d_p$ as a function of $\beta$ to the temperature $T_2$ one has:

$$(39) \qquad d_{p_2} = \frac{m_{p_2} d_{cm}}{m_{cm_2}\left(\cos(\varphi) - \sin(\varphi)\tan(\beta_2)\right)} + \frac{\delta_p \tan(\beta_2)}{2\tan(\alpha)}$$

Considering that the reference photographed at the two temperatures $T_1$ and $T_2$ is the same, one has that $m_{cm_2} = m_{cm_1}$ from which:

$$(40) \qquad m_{cm_2} = m_{cm_1} = \frac{m_{p_1} d_{cm}}{\left(\cos(\varphi) - \sin(\varphi)\tan(\beta_1)\right)\left(d_{p_1} - \frac{\delta_p \tan(\beta_1)}{2\tan(\alpha)}\right)}$$

Substituting (13) and (40) into (39) and then simplifying, we have:

$$(41) \qquad d_{p_2} = c_1 + c_2 \cos(\varphi)\tan(\beta_1 + k_T \Delta T) - \sin(\varphi)\tan^2(\beta_1 + k_T \Delta T)$$

Wherein:

$$c_1 = \frac{1}{2}\frac{m_{p_2}}{m_{p_1}}\left(\cos(\varphi) - \sin(\varphi)\tan(\beta_1)\right)\left(2d_{p_1} - \delta_p\frac{\tan(\beta_1)}{\tan(\alpha)}\right)$$

$$c_2 = \frac{d_{p_1}}{2\tan(\alpha)}$$

Solving (41) for $k_T$ one obtains (18) in the general case in which the photographed object is inclined with respect to the recording system. The same process is applicable for the determination of the parameter $\psi$.

$$d_{p_2} = c_1 + c_2 \cos(\varphi)\tan\left(\beta_1 + k_T\Delta T + \frac{1}{\psi}\frac{\partial T}{\partial t}\right) - \sin(\varphi)\tan^2\left(\beta_1 + k_T\Delta T + \frac{1}{\psi}\frac{\partial T}{\partial t}\right)$$

$$(42)$$

Wherein:

$$c_1 = \frac{m_{p_2}}{m_{p_1}}\left(\cos(\varphi) - \sin(\varphi)\tan(\beta_1)\right)\left(d_{p_1} - \delta_p\frac{\tan(\beta_1)}{2\tan(\alpha)} - k_T\Delta T\right)$$

$$c_2 = \frac{d_{p_1}}{2\tan(\alpha)}$$

Solving (42) gives the $\psi$ in the general case in which the photographed object is inclined relative to the shooting system.

On the basis of the general equation (36) it is possible to obtain different types of measurements, and particularly: (a) lengths, (b) surfaces, (c) volumes, (d) bending radii, (and) masses and weights. Also on the basis of these measures, indices and synthetic judgments on animate and inanimate subjects can be derived.

For the measurement of segments the formula (36) is directly applicable. To measure the length of a broken line and the perimeter of a polygon (36) can be applied in an iterative manner.

It is here to be specified that the parameter phi can be calculated as from the known art, using at least a gyroscope integrated into the measuring device. Preferably, the device will have a three-axial magnetometer, gyroscope and accelerometer whose data can be combined to determine a vector of inclination of the device relative to the object considered stationary.

For the measurement of the surface of a generic polygon, it is possible to divide the polygon into triangles, applying Heron's formula for calculating the area of each triangle. Heron's formula allows to derive the surface S of a triangle on the basis of the knowledge of any semi-perimeter $p$ and of the three sides (e.g. $a, b, c$):

$$(43) \qquad S = \sqrt{p(p-a)(p-b)(p-b)}$$

Considering the coordinates of the three vertices of the triangle A(xa, ya), B(xb, yb) and C(xc, yc), deducing from these the sides $a, b, c$ and substituting in (39) we have:

$$(44) \qquad S = \frac{1}{2}\left| x_c\left(y_b - y_a\right) + x_b\left(y_a - y_c\right) + x_a\left(y_c - y_b\right) \right|$$

By applying this formula to the calculation of the area $S_p$ of a generic polygon, dividing it into triangles, one has the following general formula:

$$(45) \qquad S_p = \frac{1}{2}\sum_{i=1}^{N-1}\left(y_i + y_{i+1}\right)\left(x_{i+1} - x_i\right)$$

The person skilled in the art will use, starting from the measurement of segments, similar formulas for the following cases:

- the measurement of the radius of curvature of a curve through three points;
- determination of the mass and weight of an animate or inanimate general object (through a statistical regression measurements can be performed with the object with mass and weight);
- the estimation of synthetic indexes of qualitative and/or quantitative detection of an animate or inanimate generic object, algorithms are applied which correlates, by a statistical regression, measurements performed on the object with the indexes themselves.

Step-bv-step description of an embodiment of the invention

According to an aspect of the invention, and with reference to the figures and the above theoretical illustration, the invention method is devised for calculating the dimensions of a segment on an object. Such an object is placed at a distance from a device, wherein the device includes a camera with angle $2\alpha$ of the field-of-view and a laser source placed with a distance between the center of the camera and the center of the laser source equal to $d_{cm}$. The device further includes a temperature sensor and a clock device.

The following steps are executed:

A. sending from the laser source an only laser beam onto said object, the only laser beam forming a spot or a line on a surface of said object;

B. acquiring by said camera an image of the object with the spot or line;

C. determining the position of the spot or line on the image;

D. measuring on the image the pixel distance $d_p$ from the centre of the image to the spot or line;

E. measuring on the image the pixel length $m_p$ of the segment;

F. measuring the pixel diagonal $\delta_p$ of the image;

G. measuring by a position/inclination sensor provided in the device a pitch angle $\varphi$ formed by the focal plane of the camera and the object, or assuming $\varphi = 0$ for any image acquired according to step B;

H. measuring by the temperature sensor the internal temperature T of the device with varying time and calculating the time derivative of the temperature on the basis of a reference signal provided by said clock device;

I. calculating the centimeter length $m_{cm}$ of said segment by the formula:

$$m_{cm} = d_{cm} \frac{1}{\cos(\varphi) - \dfrac{2\gamma}{\delta_p}\tan(\alpha)\sin(\varphi)} \cdot \frac{m_p}{d_p - \gamma - K_T(T - T_0) - \dfrac{1}{\psi}\dfrac{\partial T}{\partial t}}$$

wherein $t$ is a time parameter, $T_0$ is a reference temperature, $\gamma$ is a parameter characteristic of the system and equal to $\delta_p\tan(\beta)/2\tan(\alpha)$ wherein $\beta$ is the inclination angle of the laser with respect to the optical axis of the camera, $K_T$ a thermal expansion coefficient and $\psi$ a diffusivity coefficient according to the Fourier equation applied to the device, $\gamma$, $K_T$ and $\psi$ being determined by numerical simulation of a model of said device or requested to the user of the device or determined by calibration by using one or more images acquired according to step B.

$T_0$ is for example the temperature of the calibration to which the device is subjected during its manufacturing.

By "camera" any capturing system is to be understood, which is able to acquire images of the object.

The inclination angle $\varphi$ may be measured by a position/inclination sensor. Such position/inclination sensor can be for example a three-axial accelerometer, a three-axial magnetometer or a three-axial gyroscope.

The parameter $\gamma$ may be determined by calibration by using a plurality of images of a same object acquired according to step B in the steady temperature regime. For each pair of images, the following formula is calculated:

$$\gamma = \frac{d_{p1}m_{p2}\cos(\varphi_1) - d_{p2}m_{p1}\cos(\varphi_2)}{m_{p2}\cos(\varphi_1) - m_{p1}\cos(\varphi_2)}$$

wherein $d_{p1}$, $m_{p1}$ and $\varphi_1$ on one side and $d_{p2}$, $m_{p2}$ and $\varphi_2$ on the other side are measured values of $d_p$, $m_p$ and $\varphi$ respectively for two images of the same object (the two image of the pair). The value of $\gamma$ utilized in step I is an average of the values calculated for each pair of images.

The parameter $\gamma$ may be determined by calibration by using an image of an object of known dimension $m_{cm}$ acquired according to step B in the steady temperature regime, and inverting formula:

$$m_{cm} = d_{cm} \frac{1}{\cos(\varphi) - \dfrac{2\gamma}{\delta_p}\tan(\alpha)\sin(\varphi)} \cdot \frac{m_p}{d_p - \gamma - K_T(T - T_0) - \dfrac{1}{\psi}\dfrac{\partial T}{\partial t}}$$

with $T = T_0$ and $\partial T/\partial t = 0$.

According to an aspect of the invention, the parameter $K_T$ is determined by calibration utilizing a plurality of images acquired according to step B of a same object acquired at different temperatures and always in thermal equilibrium conditions. For each pair of images, the following is calculated:

$$d_{p_2} = c_1 + c_2\cos(\varphi)\tan(\beta_1 + k_T\Delta T) - \sin(\varphi)\tan^2(\beta_1 + k_T\Delta T)$$

wherein:

$$c_1 = \frac{1}{2}\frac{m_{p_2}}{m_{p_1}}(\cos(\varphi) - \sin(\varphi)\tan(\beta_1))\left(2d_{p_1} - \delta_p\frac{\tan(\beta_1)}{\tan(\alpha)}\right)$$

$$c_2 = \frac{d_{p_1}}{2\tan(\alpha)}$$

The above relationship is solved for $K_T$, wherein $d_{p1}$, $m_{p1}$ and $\beta_1$ on one side and $d_{p2}$, $m_{p2}$ on the other side are the values of $d_p$, $m_p$ and $\beta$ measured respectively for the same object, $\delta_p$ is the same pixel diagonal of the two images, and wherein $\beta_1 = \arctan(2\gamma_1\tan(\alpha)/\delta_p)$. The value of $K_T$ utilized in step I is an average of the values calculated for each pair of images.

According to an aspect of the invention, the parameter $\psi$ is determined by calibration by using a plurality of images of a same object. For any pair of images, the following is calculated:

$$d_{p_2} = c_1 + c_2 \cos(\varphi)\tan\left(\beta_1 + k_T\Delta T + \frac{1}{\psi}\frac{\partial T}{\partial t}\right) - \sin(\varphi)\tan^2\left(\beta_1 + k_T\Delta T + \frac{1}{\psi}\frac{\partial T}{\partial t}\right)$$

wherein:

$$c_1 = \frac{m_{p_2}}{m_{p_1}}\left(\cos(\varphi) - \sin(\varphi)\tan(\beta_1)\right)\left(d_{p_1} - \delta_p\frac{\tan(\beta_1)}{2\tan(\alpha)} - k_T\Delta T\right)$$

$$c_2 = \frac{d_{p_1}}{2\tan(\alpha)}$$

The above relationship is solved for $\psi$, wherein $d_{p1}$, $m_{p1}$ and $\beta_1$ on one side and $d_{p2}$, $m_{p2}$ on the other side are values of $d_p$, $m_p$ and $\beta$ measured respectively for two images of the same object, $\delta_p$ is the same pixel diagonal of the two images, and wherein $\beta_1 = \arctan(2\gamma_1\tan(\alpha)/\delta_p)$. The value of $\psi$ utilized in step I is an average of the values calculated for each pair of images.

The distance $d_{cm}$ can be calculated by calibration by utilizing a plurality of images of a same object of known dimension $R_{cm}$ acquired in a steady temperature regime. For each pair of images, the following is calculated:

$$d_{cm} = R_{cm}\cos(\varphi_1)\cos(\varphi_2)\frac{d_{p2} - d_{p1}}{m_{p2}\cos(\varphi_1) - m_{p1}\cos(\varphi_2)}$$

wherein $d_{p1}$, $m_{p1}$ and $\varphi_1$ on one side and $d_{p2}$, $m_{p2}$ and $\varphi_2$ on the other side are the values measure respectively for two images of said plurality of images. The value of $\gamma$ utilized in step I is an average of the values calculated for each pair of images.

The plurality of images can be advantageously a historical series of images corresponding to subsequent executions of the method, thus realizing an auto-calibration.

The above method can be implemented by a computer program. Such a program comprises code means such that, when they are executed on a computer, they carry out the steps C-F, H, I of the method.

Such a computer program can be stored on a memory support.

The method can be implemented on a device for the measurement of distant objects. Such a device may comprise:

- a camera with angle $2\alpha$ of the field-of-view of the camera;
- a laser source placed at a distance $d_{cm}$ from said camera;
- a three-axial accelerometer;
- a temperature sensor;
- a clock device;
- a data processing electronic unit.

The data processing electronic unit may comprise the above-mentioned program, which is configured to control the camera, the laser source, the position/inclination sensor and the temperature sensor. The program is further configured to execute the invention method, or to send data to a remote data processing unit by suitable remote communication means.

The position/inclination sensor may comprise an accelerometer, a three-axial magnetometer and a three-axial gyroscope.

Novelty over the prior art

The invention presents some substance peculiarities compared to the prior art which can be summarized as follows:

- The geometric characteristics of the system are changing as a function of the production process, wear and temperature variations of the ambient and of the measuring system. The system provides a auto-calibration process that allows to determine the angle $\beta$ with a photograph on targets of known size and by the characteristics of the images acquired during its normal use. This principle enables the production of the system using cheap components and requiring no particularly high accuracy machining. This allows making the system in a simple and economical manner. In this way the system is inherently resistant to wear and mechanical stress to which may be subjected during use.
- The system, by its nature, is exposed to thermal stresses like exposure to direct sunlight, the raising of the temperature of the battery during charging and during intensive use, the raising of the temperature of the processor during heavy use. Moreover, it could easily occur the case wherein the calibration process is executed at a temperature which is very different from that at which then measurement is made. The system includes in the equations that govern its operation, the automatic compensation of changes in internal and external temperature, such as to ensure a high accuracy of measurement irrespective of the operating temperature, within the operating range, both in stationary state and in transitional state.
- The functions of calibration and auto-calibration are particularly relevant in order to implement this system of measurement in a smartphone. In fact, this type of consumer devices is subject to stresses, both thermal and mechanical, which would make it difficult to use them as measuring instruments. The calibration and auto-calibration allow to give the system based on smartphone a dynamic zero during its use.
- The system allows to measure objects even in the case in which the object surface is not parallel to the plane of the CCD system.

In the foregoing, preferred embodiments have been described and variation of the present invention have been suggested, but it is to be understood that experts in the art can make other variations and changes, without so departing from the relevant scope of protection, as defined by the attached claims.

**Claims**

1. Method for calculating the dimensions of a segment on an object (404) at a distance (416) from a device (100) including a camera (104) with angle $2\alpha$ (420) of the field-of-view and a laser source (103) placed with a distance (413) between the center of the camera (104) and the center of the laser source (103) equal to $d_{cm}$, as well as a temperature sensor (116) and a clock device, **characterized in that** the following steps are executed:

    A. sending from said laser source (103) an only laser beam (405) onto said object (404), the laser beam forming a spot (415,415') or a line on a surface of said object (404);
    B. acquiring by said camera (104) an image of said object with said spot (415,415') or line;
    C. determining the position of said spot or line on said image;
    D. measuring on said image the pixel distance $d_p$ from the center of the image to the spot (415,415') or line;
    E. measuring on said image the pixel length $m_p$ of said segment (408);
    F. measuring the pixel diagonal $\delta_p$ (410) of the image;
    G. measuring by a position/inclination sensor (115) provided in the device (100) a pitch angle $\varphi$ formed by the focal plane of the camera (104) and said object (404), or assuming $\varphi=0$ for any image acquired according to step B;
    H. measuring by said temperature sensor (116) the internal temperature T of the device (100) with varying time and calculating the time derivative (107) of the temperature on the basis of a reference signal provided by said clock device;
    I. calculating the centimeter length $m_{cm}$ of said segment by the formula:

$$m_{cm} = d_{cm} \frac{1}{\cos(\varphi) - \frac{2\gamma}{\delta_p}\tan(\alpha)\sin(\varphi)} \cdot \frac{m_p}{d_p - \gamma - K_T(T-T_0) - \frac{1}{\psi}\frac{\partial T}{\partial t}}$$

Wherein $t$ is a time parameter, $T_0$ is a reference temperature, $\gamma$ is a parameter characteristic of the system and equal to $\delta_p\tan(\beta)/2\tan(\alpha)$ wherein $\beta$ is the inclination angle of the laser with respect to the optical axis of the camera, $K_T$ a thermal expansion coefficient and $\psi$ a diffusivity coefficient according to the Fourier equation applied to the device, $\gamma$, $K_T$ and $\psi$ being determined by numerical simulation of a model of said device (100) or requested to the user of the device or determined by calibration by using one or more images acquired according to step B.

2. Method according to claim 1, **characterized in that** said inclination angle $\varphi$ is measured by a position/inclination sensor (115), comprising for example three-axial accelerometer, three-axial magnetometer and three-axial gyroscope.

3. Method according to claim 1 or 2, **characterized in that** said parameter $\gamma$ is determined by calibration by using a plurality of images of a same object (404) acquired according to step B in the steady temperature regime, calculating for each pair of images:

$$\gamma = \frac{d_{p1}m_{p2}\cos(\varphi_1) - d_{p2}m_{p1}\cos(\varphi_2)}{m_{p2}\cos(\varphi_1) - m_{p1}\cos(\varphi_2)}$$

wherein $d_{p1}$, $m_{p1}$ and $\varphi_1$ on one side and $d_{p2}$, $m_{p2}$ and $\varphi_2$ on the other side are measured values of $d_p$, $m_p$ and $\varphi$ respectively for two images of the same object, the value of $\gamma$ utilized in step I being an average of the values calculated for each pair of images.

4. Method according to claim 1 or 2, **characterized in that** said parameter $\gamma$ is determined by calibration by using an image of an object of known dimension $m_{cm}$ acquired according to step B in the steady temperature regime, and inverting formula:

$$m_{cm} = d_{cm} \frac{1}{\cos(\varphi) - \frac{2\gamma}{\delta_p}\tan(\alpha)\sin(\varphi)} \cdot \frac{m_p}{d_p - \gamma - K_T(T-T_0) - \frac{1}{\psi}\frac{\partial T}{\partial t}}$$

with $T=T_0$ and $\partial T/\partial t=0$.

5. Method according to any claim 1 to 4, **characterized in that** said parameter $K_T$ is determined by calibration utilizing a plurality of images acquired according to step B of a same object acquired at different temperatures and always in thermal equilibrium conditions, calculating for each pair of images:

$$d_{p_2} = c_1 + c_2\cos(\varphi)\tan(\beta_1 + k_T\Delta T) - \sin(\varphi)\tan^2(\beta_1 + k_T\Delta T)$$

wherein:

$$c_1 = \frac{1}{2}\frac{m_{p_2}}{m_{p_1}}\left(\cos(\varphi) - \sin(\varphi)\tan(\beta_1)\right)\left(2d_{p_1} - \delta_p\frac{\tan(\beta_1)}{\tan(\alpha)}\right)$$

$$c_2 = \frac{d_{p_1}}{2\tan(\alpha)}$$

And solving for $K_T$, wherein $d_{p1}$, $m_{p1}$ and $\beta_1$ on one side and $d_{p2}$, $m_{p2}$ on the other side are the values of $d_p$, $m_p$ and

$\beta$ measured respectively for the same object, $\delta_p$ is the same pixel diagonal of the two images, and wherein $\beta_1 =$ arctan$(2\gamma_1 \tan(\alpha)/\delta_p)$, the value of $K_T$ utilized in step I being an average of the values calculated for each pair of images.

6. Method according to any claim 1 to 5, **characterized in that** said parameter $\psi$ is determined by calibration by using a plurality of images of a same object, calculating for any pair of images:

$$d_{p_2} = c_1 + c_2 \cos(\varphi)\tan\left(\beta_1 + k_T\Delta T + \frac{1}{\psi}\frac{\partial T}{\partial t}\right) - \sin(\varphi)\tan^2\left(\beta_1 + k_T\Delta T + \frac{1}{\psi}\frac{\partial T}{\partial t}\right)$$

wherein:

$$c_1 = \frac{m_{p_2}}{m_{p_1}}\big(\cos(\varphi) - \sin(\varphi)\tan(\beta_1)\big)\left(d_{p_1} - \delta_p\frac{\tan(\beta_1)}{2\tan(\alpha)} - k_T\Delta T\right)$$

$$c_2 = \frac{d_{p_1}}{2\tan(\alpha)}$$

And solving for $\psi$, wherein $d_{p1}$, $m_{p1}$ and $\beta_1$ on one side and $d_{p2}$, $m_{p2}$ on the other side are values of $d_p$, $m_p$ and $\beta$ measured respectively for two images of the same object, $\delta_p$ is the same pixel diagonal of the two images, and wherein $\beta_1 = $ arctan$(2\gamma_1\tan(\alpha)/\delta_p)$, the value of $\psi$ utilized in step I being an average of the values calculated for each pair of images.

7. Method according to any claim 1 to 6, **characterized in that** the distance $d_{cm}$ is calculated by calibration by utilizing a plurality of images of a same object of known dimension $R_{cm}$ acquired in a steady temperature regime, calculating for each pair of images:

$$d_{cm} = R_{cm}\cos(\varphi_1)\cos(\varphi_2)\frac{d_{p2} - d_{p1}}{m_{p2}\cos(\varphi_1) - m_{p1}\cos(\varphi_2)}$$

wherein $d_{p1}$, $m_{p1}$ and $\varphi_1$ on one side and $d_{p2}$, $m_{p2}$ and $\varphi_2$ on the other side are the values measure respectively for two images of said plurality of images, the value of $\gamma$ utilized in step I being an average of the values calculated for each pair of images.

8. Method according to any claim 1 to 7, **characterized in that** said plurality of images is a historical series of images corresponding to subsequent executions of the method, thus realizing an auto-calibration.

9. Computer program, **characterized in that** it comprises code means such that, when they are executed on a computer, they carry out the steps C-F, H, I of the method according to any claim 1 to 8.

10. Memory support, **characterized in that** the program according to claim 9 is stored on it.

11. Device (100) for the measurement of distant objects, comprising:

- a camera (104) with angle $2\alpha$ of the field-of-view of the camera;
- a laser source (103) placed at a distance $d_{cm}$ from said camera (104);
- position/inclination sensor (115);
- a temperature sensor (116);
- a clock device;
- a data processing electronic unit (108,111);

**characterized in that** said data processing electronic unit comprises the program of claim 9 configured to control said camera (104), said laser source (103), said position/inclination sensor (115) and said temperature sensor and to execute the method according to any claim 1 to 8, or to send data to a remote data processing unit by suitable remote communication means.

12. Device according to claim 11, **characterized in that** said position/inclination sensor (115) comprises a three-axial accelerometer, a three-axial magnetometer and a three-axial gyroscope.

**Patentansprüche**

1. Verfahren zum Berechnen der Dimensionen eines Segments auf einem Objekt (404) in einem Abstand (416) von einer Vorrichtung (100), die eine Kamera (104) mit einem Winkel $2\alpha$ (420) des Sichtfelds und eine Laserquelle (103), die mit einem Abstand (413) zwischen dem Zentrum der Kamera (104) und dem Zentrum der Laserquelle (103) gleich $d_{cm}$ platziert ist, sowie einen Temperatursensor (116) und eine Taktvorrichtung umfasst, **dadurch gekennzeichnet, dass** die folgenden Schritte durchgeführt werden:

A. Senden, von der Laserquelle (103) aus, eines einzigen Laserstrahls (405) zu dem Objekt (404), wobei der Laserstrahl auf einer Oberfläche des Objekts (404) einen Punkt (415, 415') oder eine Linie bildet;
B. Erfassen, durch die Kamera (104), eines Bilds des Objekts mit dem Punkt (415, 415') oder der Linie;
C. Bestimmen der Position des Punkts oder der Linie auf dem Bild;
D. Messen, auf dem Bild, des Pixelabstands $d_p$ von dem Zentrum des Bilds zu dem Punkt (415, 415') oder der Linie;
E. Messen, auf dem Bild, der Pixellänge $m_p$ des Segments (408);
F. Messen der Pixeldiagonalen $\delta_p$ (410) des Bilds;
G. Messen, durch einen Positions-/Neigungssensor (115), der in der Vorrichtung (100) bereitgestellt wird, eines Steigungswinkels $\varphi$, der durch die Brennebene der Kamera (104) und das Objekt (404) gebildet wird, oder Annehmen von $\varphi=0$ für ein Bild, das gemäß Schritt B erfasst wird;
H. Messen, durch den Temperatursensor (116), der Innentemperatur T der Vorrichtung (100) bei variierender Zeit und Berechnen der Zeitableitung (107) der Temperatur auf der Basis eines Referenzsignals, das durch die Taktvorrichtung bereitgestellt wird;
I. Berechnen der Zentimeterlänge $m_{cm}$ des Segments durch die Formel:

$$m_{cm} = d_{cm} \frac{1}{\cos(\varphi) - \dfrac{2\gamma}{\delta_p}\tan(\alpha)\sin(\varphi)} \cdot \frac{m_p}{d_p - \gamma - K_T(T - T_0) - \dfrac{1}{\psi}\dfrac{\partial T}{\partial t}} \quad ,$$

wobei $t$ ein Zeitparameter ist, $T_0$ eine Referenztemperatur ist, $\gamma$ eine Parametercharakteristik des Systems und gleich $\delta_p\tan(\beta)/2\tan(\alpha)$ ist, wobei $\beta$ der Neigungswinkel des Lasers bezüglich der optischen Achse der Kamera ist, $K_T$ ein Wärmeausdehnungskoeffizient ist und $\psi$ ein Diffusitätskoeffizient gemäß der auf die Vorrichtung angewendeten Fourier-Gleichung ist, $\gamma$, $K_T$ und $\psi$ durch numerische Simulation eines Modells der Vorrichtung (100) bestimmt werden oder für den Benutzer der Vorrichtung angefordert oder durch Kalibration unter Verwendung eines oder mehrerer Bilder bestimmt werden, die gemäß Schritt B erfasst werden.

2. Verfahren nach Anspruch 1, **dadurch gekennzeichnet, dass** der Neigungswinkel $\varphi$ durch einen Positions-/Neigungssensor (115) gemessen wird, der zum Beispiel einen Drei-Achsen-Beschleunigungsmesser, ein Drei-Achsen-Magnetometer und ein Drei-Achsen-Gyroskop aufweist.

3. Verfahren nach Anspruch 1 oder 2, **dadurch gekennzeichnet, dass** der Parameter $\gamma$ durch Kalibration unter Verwendung einer Mehrzahl von Bildern eines selben Objekts (404), die gemäß Schritt B erfasst wird, bei der Gleichbleibende-Temperatur-Betriebsweise bestimmt wird, wobei für jedes Paar von Bildern berechnet wird:

$$\gamma = \frac{d_{p1}m_{p2}\cos(\varphi_1) - d_{p2}m_{p1}\cos(\varphi_2)}{m_{p2}\cos(\varphi_1) - m_{p1}\cos(\varphi_2)} \quad ,$$

wobei $d_{p1}$, $mp_1$ und $\varphi_1$ einerseits und $d_{p2}$, $mp_2$ und $\varphi_2$ andererseits gemessene Werte von $d_p$, $m_p$ beziehungsweise $\varphi$ für zwei Bilder desselben Objekts sind, der Wert von $\gamma$, der bei Schritt I verwendet wird, ein Mittelwert der Werte ist, die für jedes Paar von Bildern berechnet werden.

4. Verfahren nach Anspruch 1 oder 2, **dadurch gekennzeichnet, dass** der Parameter $\gamma$ durch Kalibration unter Verwendung eines Bilds eines Objekts bekannter Dimension $m_{cm}$, das gemäß Schritt B erfasst wird, bei der Gleichbleibende-Temperatur-Betriebsweise bestimmt wird, und Formelumkehrung:

$$m_{cm} = d_{cm} \frac{1}{\cos(\varphi) - \frac{2\gamma}{\delta_p} \tan(\alpha)\sin(\varphi)} \cdot \frac{m_p}{d_p - \gamma - K_T(T - T_0) - \frac{1}{\psi}\frac{\partial T}{\partial t}}$$

mit T=T0 und $\partial T/\partial t$=0.

5. Verfahren gemäß einem der Ansprüche 1 bis 4, **dadurch gekennzeichnet, dass** der Parameter $K_T$ durch Kalibration unter Verwendung einer Mehrzahl von Bildern, die gemäß Schritt B erfasst wird, eines selben Objekts bestimmt wird, das bei unterschiedlichen Temperaturen und stets unter Wärmegleichgewichtsbedingungen erfasst wird, wobei für jedes Paar von Bildern berechnet wird:

$$d_{p_2} = c_1 + c_2 \cos(\varphi)\tan(\beta_1 + k_T\Delta T) - \sin(\varphi)\tan^2(\beta_1 + k_T\Delta T)$$

wobei

$$c_1 = \frac{1}{2}\frac{m_{p_2}}{m_{p_1}}(\cos(\varphi) - \sin(\varphi)\tan(\beta_1))\left(2d_{p_1} - \delta_p\frac{\tan(\beta_1)}{\tan(\alpha)}\right)$$

$$c_2 = \frac{d_{p_1}}{2\tan(\alpha)}$$

und Lösen für $K_T$, wobei $d_{p1}$, $m_{p1}$ und $\beta_1$ einerseits und $d_{p2}$, $m_{p2}$ andererseits die Werte von $d_p$, $m_p$ und $\beta$ sind, die jeweils für dasselbe Objekt gemessen werden, $\delta_p$ dieselbe Pixeldiagonale der zwei Bilder ist und wobei $\beta_1 = \arctan(2_{\gamma 1}\tan(\alpha)/\delta_p)$ ist, der Wert von $K_T$, der bei Schritt I verwendet wird, ein Mittelwert der Werte ist, die für jedes Paar von Bildern berechnet werden.

6. Verfahren gemäß einem der Ansprüche 1 bis 5, **dadurch gekennzeichnet, dass** der Parameter $\psi$ durch Kalibration unter Verwendung einer Mehrzahl von Bildern eines selben Objekts bestimmt wird, wobei für ein Paar von Bildern berechnet wird:

$$d_{p_2} = c_1 + c_2 \cos(\varphi)\tan\left(\beta_1 + k_T\Delta T + \frac{1}{\psi}\frac{\partial T}{\partial t}\right) - \sin(\varphi)\tan^2\left(\beta_1 + k_T\Delta T + \frac{1}{\psi}\frac{\partial T}{\partial t}\right)$$

wobei

$$c_1 = \frac{m_{p_2}}{m_{p_1}}(\cos(\varphi) - \sin(\varphi)\tan(\beta_1))\left(d_{p_1} - \delta_p\frac{\tan(\beta_1)}{2\tan(\alpha)} - k_T\Delta T\right)$$

$$c_2 = \frac{d_{p_1}}{2\tan(\alpha)}$$

und Lösen für $\psi$, wobei $d_{p1}$, $m_{p1}$ und $\beta_1$ einerseits und $d_{p2}$, $m_{p2}$ andererseits Werte von $d_p$, $m_p$ und $\beta$ sind, die jeweils für zwei Bilder desselben Objekts gemessen werden, $\delta_p$ dieselbe Pixeldiagonale der zwei Bilder ist und wobei $\beta_1 = \arctan(2_\gamma1\tan(\alpha)/\delta_p)$ ist, der Wert von $\psi$, der bei Schritt I verwendet wird, ein Mittelwert der Werte ist, die für jedes Paar von Bildern berechnet werden.

7.  Verfahren gemäß einem der Ansprüche 1 bis 6, **dadurch gekennzeichnet, dass** der Abstand $d_{cm}$ durch Kalibration berechnet wird, unter Verwendung einer Mehrzahl von Bildern eines selben Objekts bekannter Dimension $R_{cm}$, die bei einer Gleichbleibende-Temperatur-Betriebsweise erfasst wird, wobei für jedes Paar von Bildern berechnet wird:

$$d_{cm} = R_{cm}\cos(\varphi_1)\cos(\varphi_2)\frac{d_{p2}-d_{p1}}{m_{p2}\cos(\varphi_1)-m_{p1}\cos(\varphi_2)},$$

wobei $d_{p1}$, $m_{p1}$ und $\varphi_1$ einerseits und $d_{p2}$, $m_{p2}$ und $\varphi_2$ andererseits die Werte sind, die jeweils für zwei Bilder der Mehrzahl von Bildern gemessen werden, wobei der Wert von $\gamma$, der bei Schritt I verwendet wird, ein Mittelwert der Werte ist, die für jedes Paar von Bildern berechnet werden.

8.  Verfahren gemäß einem der Ansprüche 1 bis 7, **dadurch gekennzeichnet, dass** die Mehrzahl von Bildern eine historische Serie von Bildern ist, die aufeinanderfolgenden Ausführungen des Verfahrens entsprechen, wodurch eine Autokalibration verwirklicht wird.

9.  Computerprogramm, **dadurch gekennzeichnet, dass** dasselbe eine Codeeinrichtung aufweist, so dass dieselbe bei Ausführung auf einem Computer die Schritte C-F, H, I des Verfahrens gemäß einem der Ansprüche 1 bis 8 ausführt.

10. Speicherträger, **dadurch gekennzeichnet, dass** das Programm gemäß Anspruch 9 auf demselben gespeichert ist.

11. Vorrichtung (100) für die Messung von entfernten Objekten, die folgende Merkmale aufweist:

    - eine Kamera (104) mit einem Winkel $2\alpha$ des Sichtfelds der Kamera;
    - eine Laserquelle (103), die in einem Abstand $d_{cm}$ von der Kamera (104) platziert ist;
    - Positions-/Neigungssensor (115);
    - einen Temperatursensor (116);
    - eine Taktvorrichtung;
    - eine elektronische Datenverarbeitungseinheit (108; 111);

    **dadurch gekennzeichnet, dass** die elektronische Datenverarbeitungseinheit das Programm gemäß Anspruch 9 aufweist, das dazu konfiguriert ist, die Kamera (104), die Laserquelle (103), den Positions-/Neigungssensor (115) und den Temperatursensor zu steuern und das Verfahren gemäß einem der Ansprüche 1 bis 8 auszuführen, oder Daten durch eine geeignete entfernte Kommunikationseinrichtung an eine entfernte Datenverarbeitungseinheit zu senden.

12. Vorrichtung nach Anspruch 11, **dadurch gekennzeichnet, dass** der Positions-/Neigungssensor (115) einen Beschleunigungsmesser, ein Drei-Achsen-Magnetometer und ein Drei-Achsen-Gyroskop aufweist.

**Revendications**

1.  Procédé de calcul des dimensions d'un segment sur un objet (404) à une distance (416) d'un dispositif (100) incluant une caméra (104) avec un angle $2\alpha$ (420) du champ de vision et une source laser (103) placée avec une distance (413) entre le centre de la caméra (104) et le centre de la source laser (103) égale à $d_{cm}$, ainsi qu'un capteur de température (116) et un dispositif d'horloge, **caractérisé en ce que** les étapes suivantes sont exécutées :

    A. envoi de ladite source laser (103) d'un seul faisceau laser (405) sur ledit objet (404), le faisceau laser formant un point (415,415') ou une ligne sur une surface dudit objet (404) ;
    B. acquisition par ladite caméra (104) d'une image dudit objet avec ledit point (415,415') ou ligne ;
    C. détermination de la position dudit point ou ligne sur ladite image ;

D. mesure sur ladite image de la distance en pixels $d_p$ à partir du centre de l'image vers le point (415,415') ou ligne ;

E. mesure sur ladite image de la longueur en pixels $m_p$ dudit segment (408) ;

F. mesure de la diagonale en pixels $\delta_p$ (410) de l'image ;

G. mesure par un capteur de position/inclinaison (115) fourni dans le dispositif (100) d'un angle de tangage $\varphi$ formé par le plan focal de la caméra (104) et ledit objet (404), ou en supposant $\varphi = 0$ pour une quelconque image acquise selon l'étape B ;

H. mesure par ledit capteur de température (116) de la température interne T du dispositif (100) en faisant varier le temps et en calculant la dérivée en temps (107) de la température sur la base d'un signal de référence fourni par ledit dispositif d'horloge ;

I. calcul de la longueur en centimètres $m_{cm}$ dudit segment par la formule :

$$m_{cm} = d_{cm} \frac{1}{\cos(\varphi) - \frac{2\gamma}{\delta_p}\tan(\alpha)\sin(\varphi)} \cdot \frac{m_p}{d_p - \gamma - K_T(T - T_0) - \frac{1}{\psi}\frac{\partial T}{\partial t}}$$

Dans lequel $t$ est un paramètre de temps, $T_0$ est une température de référence, $\gamma$ est un paramètre caractéristique du système et égal à $\delta_p\tan(\beta)/2\tan(\alpha)$ dans lequel $\beta$ est l'angle d'inclinaison du laser par rapport à l'axe optique de la caméra, $K_T$ un coefficient de dilatation thermique et $\psi$ un coefficient de diffusivité selon l'équation de Fourier appliquée au dispositif, $\gamma$, $K_T$ et $\psi$ étant déterminés par simulation numérique d'un modèle dudit dispositif (100) ou demandés à l'utilisateur du dispositif ou déterminés par étalonnage à l'aide d'une ou plusieurs images acquises selon l'étape B.

2. Procédé selon la revendication 1, **caractérisé en ce que** ledit angle d'inclinaison $\varphi$ est mesuré par un capteur de position/inclinaison (115), comprenant par exemple un accéléromètre triaxial, un magnétomètre triaxial et un gyroscope triaxial.

3. Procédé selon la revendication 1 ou 2, **caractérisé en ce que** ledit paramètre $\gamma$ est déterminé par étalonnage à l'aide d'une pluralité d'images d'un même objet (404) acquises selon l'étape B dans un régime de température stable, en calculant pour chaque paire d'images :

$$\gamma = \frac{d_{p1}m_{p2}\cos(\varphi_1) - d_{p2}m_{p1}\cos(\varphi_2)}{m_{p2}\cos(\varphi_1) - m_{p1}\cos(\varphi_2)}$$

dans lequel $d_{p1}$, $m_{p1}$ et $\varphi_1$ d'un côté et $d_{p2}$, $m_{p2}$ et $\varphi_2$ de l'autre côté sont des valeurs mesurées de $d_p$, $m_p$ et $\varphi$ respectivement pour deux images du même objet, la valeur de $\gamma$ utilisée à l'étape I étant une moyenne des valeurs calculées pour chaque paire d'images.

4. Procédé selon la revendication 1 ou 2, **caractérisé en ce que** ledit paramètre $\gamma$ est déterminé par étalonnage à l'aide d'une image d'un objet de dimension connue $m_{cm}$ acquise selon l'étape B dans le régime de température stable, et en inversant la formule :

$$m_{cm} = d_{cm} \frac{1}{\cos(\varphi) - \frac{2\gamma}{\delta_p}\tan(\alpha)\sin(\varphi)} \cdot \frac{m_p}{d_p - \gamma - K_T(T - T_0) - \frac{1}{\psi}\frac{\partial T}{\partial t}}$$

avec $T = T_0$ et $\partial T/\partial t = 0$.

5. Procédé selon une quelconque revendication 1 à 4, **caractérisé en ce que** ledit paramètre $K_T$ est déterminé par étalonnage en utilisant une pluralité d'images acquises selon l'étape B d'un même objet acquis à différentes températures et toujours dans des conditions d'équilibre thermique, en calculant pour chaque paire d'images :

$$d_{P2} = c_1 + c_2 \cos(\varphi)\tan(\beta_1 + k_T\Delta T) + \sin(\varphi)\tan^2(\beta_1 + k_T\Delta T)$$

dans lequel :

$$c_1 = \frac{1}{2}\frac{m_{p_2}}{m_{p_1}}\left(\cos(\varphi) - \sin(\varphi)\tan(\beta_1)\right)\left(2d_{p_1} - \delta_p\frac{\tan(\beta_1)}{\tan(\alpha)}\right)$$

$$c_2 = \frac{d_{p_1}}{2\tan(\alpha)}$$

Et en résolvant pour $K_T$, dans lequel $d_{p1}$, $m_{p1}$ et $\beta_1$ d'un côté et $d_{p2}$, $m_{p2}$ et $\beta_2$ de l'autre côté sont des valeurs de $d_p$, $m_p$ et $\beta$ mesurées respectivement pour le même objet, $\delta_p$ est la même diagonale en pixels des deux images, et dans lequel $\beta_1$ = arctan($2\gamma_1$tan($\alpha$)/$\delta_p$), la valeur de $K_T$ utilisée à l'étape I étant une moyenne des valeurs calculées pour chaque paire d'images.

6. Procédé selon une quelconque revendication 1 à 5, **caractérisé en ce que** ledit paramètre $\psi$ est déterminé par étalonnage à l'aide d'une pluralité d'images d'un même objet, en calculant pour chaque paire d'images :

$$d_{p_2} = c_1 + c_2\cos(\varphi)\tan\left(\beta_1 + k_T\Delta T + \frac{1}{\psi}\frac{\partial T}{\partial t}\right) - \sin(\varphi)\tan^2\left(\beta_1 + k_T\Delta T + \frac{1}{\psi}\frac{\partial T}{\partial t}\right)$$

dans lequel :

$$c_1 = \frac{m_{p_2}}{m_{p_1}}\left(\cos(\varphi) - \sin(\varphi)\tan(\beta_1)\right)\left(d_{p_1} - \delta_p\frac{\tan(\beta_1)}{2\tan(\alpha)} - k_T\Delta T\right)$$

$$c_2 = \frac{d_{p_1}}{2\tan(\alpha)}$$

Et en résolvant pour $\psi$, dans lequel $d_{p1}$, $m_{p1}$ et $\beta_1$ d'un côté et $d_{p2}$, $m_{p2}$ de l'autre côté sont des valeurs de $d_p$, $m_p$ et $\beta$ mesurées respectivement pour deux images du même objet, $\delta_p$ est la même diagonale en pixels des deux images, et dans lequel $\beta_1$ = arctan($2\gamma_1$tan($\alpha$)/$\delta_p$), la valeur de $\psi$ utilisée à l'étape I étant une moyenne des valeurs calculées pour chaque paire d'images.

7. Procédé selon une quelconque revendication 1 à 6, **caractérisé en ce que** la distance $d_{cm}$ est calculée par étalonnage à l'aide d'une pluralité d'images d'un même objet de dimension connue $R_{cm}$ acquise dans un régime de température stable, en calculant pour chaque paire d'images :

$$d_{cm} = R_{cm}\cos(\varphi_1)\cos(\varphi_2)\frac{d_{p2} - d_{p1}}{m_{p2}\cos(\varphi_1) - m_{p1}\cos(\varphi_2)}$$

dans lequel $d_{p1}$, $m_{p1}$ et $\varphi_1$ d'un côté et $d_{p2}$, $m_{p2}$ et $\varphi_2$ de l'autre côté sont les valeurs mesurées respectivement pour deux images de ladite pluralité d'images, la valeur de $\gamma$ utilisée à l'étape I étant une moyenne des valeurs calculées pour chaque paire d'images.

8. Procédé selon une quelconque revendication 1 à 7, **caractérisé en ce que** ladite pluralité d'images est une série historique d'images correspondant à des exécutions successives du procédé, réalisant ainsi un auto-étalonnage.

9. Programme informatique, **caractérisé en ce qu'**il comprend un moyen de code tel que, lorsqu'il est exécuté sur un ordinateur, il réalise les étapes C-F, H, I du procédé selon une quelconque revendication 1 à 8.

10. Support de mémoire, **caractérisé en ce que** le programme selon la revendication 9 est stocké sur celui-ci.

11. Dispositif (100) pour la mesure d'objets distants, comprenant :

   - une caméra (104) avec un angle $2\alpha$ du champ de vision de la caméra ;
   - une source laser (103) placée à une distance $d_{cm}$ de ladite caméra (104) ;
   - capteur de position/inclinaison (115) ;
   - un capteur de température (116) ;
   - un dispositif d'horloge ;
   - une unité électronique de traitement de données (108,111) ;

   **caractérisé en ce que** ladite unité électronique de traitement de données comprend le programme de la revendication 9 configuré pour contrôler ladite caméra (104), ladite source laser (103), ledit capteur de position/inclinaison (115) et ledit capteur de température et pour exécuter le procédé selon une quelconque revendication 1 à 8, ou pour envoyer des données à une unité de traitement de données distantes via un moyen de communication à distance approprié.

12. Dispositif selon la revendication 11, **caractérisé en ce que** ledit capteur de position/inclinaison (115) comprend un accéléromètre triaxial, un magnétomètre triaxial et un gyroscope triaxial.

Fig. 1

Fig. 2

Fig. 3

**500** start

**502** acquisition Time Stamp (Real time clock)

**504** acquisition of the temperature variation along time

**506** Acquisition from sensors:
- accelerometer
- magnetometer
- gyroscope
- internal termometer
- infrared termometer
- Igrometer
- Barometer

**508** Processing and encryption of the sensed data and of the area of laser interference

**510** Decomposition of the string of data encrypted in binary sequence

**501** automatic detection of the features of the object to be measured

**503** Manual selection of additional features of the object to be measured

**505** Extraction of the section of high-resolution image including the laser interference point

**509** scale reduction of the image

**515** Writing of each bit of the encrypted string in the least significant bit of each ARGB color component of the reduced image

**520** processed image

High-resolution
image in
ARGB 32-bit format

Search area of
the laser
interference point

450

interference point
corresponding to a
very far object

Interference point
corresponding to a
very close object

415

415'

450

high-resolution search
area of the laser interference
point in the ARGB 32-bit format

image reduced to scale
in the ARGB 32-bit format

Fig. 4

Fig. 5

Fig. 6

Fig. 7

Fig. 8

Fig. 9

(a)
real domain

(b)
pixel domain

Fig. 10

EP 3 194 883 B1

Fig. 11

EP 3 194 883 B1

Fig. 12

Fig. 13

| dp | mp | 197,0 | 202,0 | 203,0 | 211,0 | 215,0 | 215,0 | 248,0 | 271,0 | 318,0 | 340,0 | 388,0 | 477,0 | 527,0 | 528,0 | 535,0 | 572 |
|---|---|---|---|---|---|---|---|---|---|---|---|---|---|---|---|---|---|
| | | 568,0 | 600,2 | 603,0 | 661,1 | 683,2 | 683,1 | 886,2 | 1034,1 | 1343,4 | 1473,1 | 1786,2 | 2356,4 | 2660,1 | 2677,2 | 2715,0 | 2944,1 |
| dp | mp | | | | | | | | | | | | | | | | |
| 197 | 568,0 | | | | | | | | | | | | | | | | |
| 202 | 600,2 | | | | | | | | | | | | | | | | |
| 203 | 603,0 | | | | | | | | | | | | | | | | |
| 211 | 661,1 | | | | | | | | | | | | | | | | |
| 215 | 683,2 | | | | | | | | | | | | | | | | |
| 215 | 683,1 | | | | | | | | | | | | | | | | |
| 248 | 886,2 | | | | | | | | | | | | | | | | |
| 271 | 1034,1 | 106,8 | | | | | | | | | | | | | | | |
| 318 | 1343,4 | 108,4 | 108,3 | 109,3 | 107,3 | 108,4 | 108,4 | | | | | | | | | | |
| 340 | 1473,1 | 107,3 | 107,1 | 108,0 | 106,0 | 106,9 | 106,9 | 109,1 | | | | | | | | | |
| 388 | 1786,2 | 107,9 | 107,9 | 108,7 | 107,0 | 107,8 | 107,9 | 110,2 | 110,1 | | | | | | | | |
| 477 | 2356,4 | 108,1 | 108,0 | 108,8 | 107,3 | 108,0 | 108,0 | 110,0 | 109,9 | 107,1 | 111,5 | 109,2 | | | | | |
| 527 | 2660,1 | 107,4 | 107,3 | 108,0 | 106,5 | 107,2 | 107,2 | 108,6 | 108,2 | 104,7 | 107,9 | 103,9 | | | | | |
| 528 | 2677,2 | 107,9 | 107,8 | 108,5 | 107,1 | 107,7 | 107,8 | 109,5 | 109,2 | 106,5 | 110,0 | 107,3 | | | | | |
| 535 | 2715,0 | 107,6 | 107,5 | 108,2 | 106,7 | 107,4 | 107,4 | 108,9 | 108,6 | 105,5 | 108,7 | 105,3 | | | | | |
| 572 | 2944,1 | 107,4 | 107,2 | 108,0 | 106,5 | 107,1 | 107,1 | 108,5 | 108,0 | 104,8 | 107,7 | 104,2 | 96,1 | | | | |

Fig. 14

| dp | mp | 197,0 | 202,0 | 203,0 | 211,0 | 215,0 | 215,0 | 248,0 | 271,0 | 318,0 | 340,0 | 388,0 | 477,0 | 527,0 | 528,0 | 535,0 | 572 |
|---|---|---|---|---|---|---|---|---|---|---|---|---|---|---|---|---|---|
| dp | mp | 568,0 | 600,2 | 603,0 | 661,1 | 683,2 | 683,1 | 886,2 | 1034,1 | 1343,4 | 1473,1 | 1786,2 | 2356,4 | 2660,1 | 2677,2 | 2715,0 | 2944,1 |
| 197 | 568,0 | | | | | | | | | | | | | | | | |
| 202 | 600,2 | | | | | | | | | | | | | | | | |
| 203 | 603,0 | | | | | | | | | | | | | | | | |
| 211 | 661,1 | | | | | | | | | | | | | | | | |
| 215 | 683,2 | | | | | | | | | | | | | | | | |
| 215 | 683,1 | | | | | | | | | | | | | | | | |
| 248 | 886,2 | | | | | | | | | | | | | | | | |
| 271 | 1034,1 | 9,53 | | | | | | | | | | | | | | | |
| 318 | 1343,4 | 9,36 | 9,37 | 9,32 | 9,41 | 9,36 | 9,36 | | | | | | | | | | |
| 340 | 1473,1 | 9,48 | 9,49 | 9,45 | 9,53 | 9,50 | 9,49 | 9,40 | | | | | | | | | |
| 388 | 1786,2 | 9,41 | 9,41 | 9,38 | 9,44 | 9,41 | 9,41 | 9,33 | 9,33 | | | | | | | | |
| 477 | 2356,4 | 9,39 | 9,40 | 9,38 | 9,41 | 9,40 | 9,39 | 9,35 | 9,35 | 9,42 | 9,31 | 9,36 | | | | | |
| 527 | 2660,1 | 9,46 | 9,47 | 9,45 | 9,48 | 9,47 | 9,47 | 9,44 | 9,45 | 9,52 | 9,45 | 9,54 | | | | | |
| 528 | 2677,2 | 9,42 | 9,42 | 9,40 | 9,43 | 9,42 | 9,42 | 9,38 | 9,38 | 9,45 | 9,37 | 9,43 | | | | | |
| 535 | 2715,0 | 9,45 | 9,45 | 9,43 | 9,46 | 9,45 | 9,45 | 9,42 | 9,42 | 9,49 | 9,42 | 9,50 | | | | | |
| 572 | 2944,1 | 9,47 | 9,47 | 9,46 | 9,49 | 9,47 | 9,47 | 9,45 | 9,46 | 9,52 | 9,46 | 9,53 | 9,70 | | | | |

Fig. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014063020 A
- US 2012307260 A